# EUROPEAN PATENT APPLICATION

(11) **EP 2 642 321 A1**
(43) Date of publication of application: **25.09.2013**
(21) Application number: 11841631.2
(22) Date of filing: 16.11.2011
(51) Int. Cl.: G02B 5/30, B32B 7/02, B32B 7/12, B42D 15/10

(54) **DOUBLE-REFRACTION PATTERN TRANSFER FOIL**

(30) Priority: 19.11.2010 JP 2010259401
(71) Applicant: FUJIFILM Corporation, Tokyo 106-0031 (JP)
(72) Inventor: KANEIWA Hideki, Ashigarakami-gun Kanagawa 258-8577 (JP); YAMAMOTO Yuuya, Ashigarakami-gun Kanagawa 258-8577 (JP); IKEDA Reona, Ashigarakami-gun Kanagawa 258-8577 (JP); ITOU Hideaki, Ashigarakami-gun Kanagawa 258-8577 (JP)
(74) Representative: HOFFMANN EITLE
(86) International application number: PCT/JP2011/076337
(87) International publication number: WO 2012/067128

(57) **Abstract**

According to the present invention, a birefringence pattern transfer foil, comprising at least one patterned optically anisotropic layer having two or more regions of differing birefringence and at least one adhesive layer on a temporary support, characterized in that a blocking prevention means is provided to the adhesive layer and/or characterized in that the retardation of the adhesive layer is 40 nm or less is provided. The birefringence pattern transfer foil of the present invention has excellent applicability and handling, and can be used on a variety of subjects.

## Description

### Technical Field

The present invention relates to a birefringence pattern transfer foil and to an article to which a birefringence pattern has been transferred by means of this birefringence pattern transfer foil.

### Background Art

Counterfeit products such as luxury brand products, cash vouchers, gift certificates, banknotes, credit cards, and industrial parts have continued to increase in recent years. As a countermeasure to such counterfeit products, the application of images employing birefringence patterns to security labels has been proposed (Patent Documents 1 and 2). Birefringence patterns have the unique property of being nearly invisible under ordinary unpolarized light sources and becoming visible when held under a polarizing filter. They are difficult to copy. Using such birefringence patterns as labels that are applied to articles for which counterfeiting is a concern and using a polarizing filter or the like to verify them as needed makes it possible to identify genuine articles and counterfeit products.

However, although the label itself is difficult to copy, it will sometimes detach from the genuine article. In such cases, there is a risk that it will be detached from a genuine article and transferred to a counterfeit article. As a countermeasure, it has been proposed that the birefringence pattern be formed on a transfer foil and transferred to a target article for use (Patent Document 3). In that case, since the birefringence pattern is present as a thin foil, it is difficult to detach or tends to be damaged by detachment, preventing its transfer.

On the other hand, when the configuration of the transfer foil has a detachment layer and an adhesive layer, handling is difficult due to the conflicting properties of the layers. When the transfer foil is manufactured in the form of a roll to enhance productivity, so-called "blocking" sometimes occurs where quality is compromised by adhesion between the adhesive layer and the back surface of the support during storage. Patent Document 4 discloses the addition of an inorganic filler such as silica microparticles to the adhesive layer to prevent blocking. However, the impact of the addition on birefringence is not taken into account in the publication.

### Prior Art Documents

### Patent Documents

Patent Document 1: Japanese Unexamined Patent Publication (KOKAI) No. 2001-63300
Patent Document 2: Japanese Unexamined Patent Publication (KOKAI) No. 2009-175208
Patent Document 3: Japanese Unexamined Patent Publication (KOKAI) No. 2010-113249
Patent Document 4: Japanese Unexamined Patent Publication (KOKAI) No. 2001-71698

### Summary of the Invention

### Object to be Solved by the Invention

The present invention has for its object to provide a birefringence pattern transfer foil that affords a latent image with good visibility, that is easy to handle, and that can be employed on various objects.

### Means for Solving the Object

The present inventors examined the properties of an adhesive layer that tended not to impact the visibility of the latent image. They also conducted extensive research into an adhesive layer that was easy to handle, resulting in the present invention.
The present invention thus provides [1] to [12] below:
[1] A birefringence pattern transfer foil, comprising at least one patterned optically anisotropic layer having two or more regions of differing birefringence and at least one adhesive layer on a temporary support, characterized in that the retardation of the adhesive layer is 40 nm or less.
[2] The birefringence pattern transfer foil according to [1], characterized in that a blocking prevention means is provided to the adhesive layer.

[3] The birefringence pattern transfer foil according to [2], characterized in that the blocking prevention means is comprised of microparticles added to the adhesive layer.
[4] The birefringence pattern transfer foil according to [2], characterized in that the blocking prevention means is a cover film adhered to the surface of the adhesive layer.
[5] A birefringence pattern transfer foil, comprising at least one patterned optically anisotropic layer having two or more regions of differing birefringence and at least one adhesive layer on a temporary support, characterized in that a blocking prevention means is provided to the adhesive layer.

[6] The birefringence pattern transfer foil according to any one of [2] to [5], characterized by being provided in the form of a roll film.
[7] The birefringence pattern transfer foil according to any one of [1] to [6], characterized in that the patterned optically anisotropic layer is a layer formed from a composition comprising a liquid crystal compound having at least one reactive group.
[8] The birefringence pattern transfer foil according to [7], characterized in that the liquid crystal compound comprises at least a radically reactive group and a cationically reactive group.

[9] The birefringence pattern transfer foil according to [8], characterized in that the radically reactive group is an acrylic group and/or a methacrylic group, and the cationically reactive group is a vinyl ether group, an oxetane group, and/or an epoxy group.
[10] The birefringence pattern transfer foil according to any one of [1] to [9], characterized in that the transmittance after transfer is 30% or greater.
[11] A reflective article characterized by comprising a birefringence pattern transferred using the birefringence pattern transfer foil according to any one of [1] to [10].
[12] A transparent article, characterized by comprising a birefringence pattern transferred using the birefringence pattern transfer foil according to any one of [1] to [10].

### Effect of the Invention

The present invention provides a birefringence pattern transfer foil that is easy to apply, easy to handle, and can be used on a variety of objects.

### Brief Description of the Drawings

Figure 1 is a drawing schematically showing the configuration of a basic birefringence pattern transfer foil having a temporary support, a patterned optically anisotropic layer, and an adhesive layer.
Figure 2 is a drawing schematically showing the configuration of a birefringence pattern transfer foil having a detachment layer.
Figure 3 is a drawing schematically showing the configuration of a birefringence pattern transfer foil having a releasing layer.
Figure 4 is a drawing schematically showing the configuration of a birefringence pattern transfer foil having an orientation layer.
Figure 5 is a drawing schematically showing the configuration of a birefringence pattern transfer foil having a printed layer.
Figure 6 is a drawing schematically showing the configuration of a birefringence pattern transfer foil having an additive layer.
Figure 7 is a drawing schematically showing the configuration of a birefringence pattern transfer foil having multiple patterned optically anisotropic layers.
Figure 8 is a drawing schematically showing the configuration of a birefringence pattern transfer foil having a blocking prevention means.
Figure 9 is a drawing schematically showing the configuration of a basic birefringence pattern builder.
Figure 10 is a drawing schematically showing the configuration of a birefringence pattern builder having an optically anisotropic layer on a temporary support.
Figure 11 is a drawing schematically showing the configuration of a birefringence pattern builder having a detachment layer and/or a releasing layer.
Figure 12 is a drawing schematically showing the configuration of a birefringence pattern builder having an orientation layer.
Figure 13 is a drawing schematically showing the configuration of a birefringence pattern builder having a printed layer.
Figure 14 is a drawing schematically showing the configuration of a transfer mold birefringence pattern builder having a reflective layer.
Figure 15 is a drawing schematically showing the configuration of a birefringence pattern builder having an additive layer.
Figure 16 is a drawing schematically showing the configuration of a birefringence pattern builder having multiple optically anisotropic layers.
Figure 17 is a drawing schematically showing the configuration of an article having a birefringence pattern transferred using a birefringence pattern transfer foil.
Figure 18 is a drawing showing the pattern of the pattern exposure conducted in the Examples.
Figure 19 is a drawing showing a general view of the birefringence pattern observed on an article to which the birefringence pattern prepared in Example 1 has been transferred.

### Modes of Carrying Out the Invention

The present invention is described in detail below.
In the present description, a "to" is employed to mean that the upper limit value and lower limit value of the numeric values indicated before and after it are included.

In the present description, "Re" denotes retardation. Re can be measured by the spectral phase differential method by conversion from a transmission or reflectance spectrum to a phase differential by the method described in the Journal of the Optical Society of America, Vol. 39, p. 791-794 (1949) or Japanese Unexamined Patent Publication (KOKAI) No. 2008-256590. The above references are measurement methods that employ transmission spectra. Since the light passes through the optically anisotropic layer twice, particularly in the case of reflection, half of the phase differential converted from the reflection spectrum can be employed as the phase differential of the optically anisotropic layer. Re denotes the frontal retardation, unless otherwise indicated. Re(A) is the retardation employing light of wavelengthλnm as the measurement beam. Re in the present description means the retardation measured at the wavelengths of 611 ± 5 nm, 545 ± 5 nm, and 435 ± 5 nm for R, G, and B, and means the retardation measured at a wavelength of 545 ± 5 nm when no reference to color is given.

In the present description, use of the word "essentially" in reference to an angle means that the difference from the precise angle falls within a range of less than ± 5°. The difference from the precise angle is preferably less than 4°, and is more preferably less than 3°. In reference to retardation, the word "essentially" means a difference in retardation of within ± 5°, inclusive. A "retardation of essentially 0" means a retardation of 5 nm or less. Unless specifically stated otherwise, the wavelength at which a refractive index is measured refers to any wavelength within the visible light region. In the present description, the term "visible light" refers to light with a wavelength of from 400 to 700 nm.

### [The definition of a birefringence pattern]

Broadly defined, a birefringence pattern is a pattern in which two or more domains of differing birefringence are arranged and pictured in the two-dimensional in-plane or three-dimensionally. In particular, two-dimensionally within a plane, the birefringence is defined by the two parameters of the direction of the slow axis in which the refractive index peaks and the magnitude of retardation within the domain. For example, in-plane oriented defects and the inclination distribution of liquid crystals in the direction of thickness in a phase differential film based on a compound with liquid crystallinity can also be said to constitute a birefringence pattern in a broad sense. However, in a narrow sense, patterning that is achieved by intentionally controlling birefringence based on a predetermined design is desirably defined as a birefringence pattern. Unless specifically stated otherwise, the birefringence pattern can go across multiple layers, and the boundaries between the patterns of the multiple layers can align or be different.

### [The birefringence pattern transfer foil]

In the present description, the term "birefringence pattern transfer foil" refers to a material having at least a temporary support and a patterned optically anisotropic layer and adhesive layer formed on the temporary support, such that the patterned optically anisotropic layer can be transferred to an article by a prescribed process. The process is not specifically limited. For example, it can be a process where the birefringence pattern transfer foil is pressure bonded to an article by hot stamping, in-line stamping, or one of various types of lamination, followed by detachment of the temporary support to transfer the patterned optically anisotropic layer to the article. In this process, layers other than the patterned optically anisotropic layer and the temporary support can be simultaneously transferred to the article, or not transferred. In the present description, the term "patterned optically anisotropic layer" refers to an optically anisotropic layer having a birefringence pattern. In other words, it refers to an optically anisotropic layer having two or more regions of differing birefringence. The patterned optically anisotropic layer preferably has three or more regions of differing birefringence. Individual regions of identical birefringence can be arranged in a continuous or discontinuous form. The patterned optically anisotropic layer can be readily prepared using the birefringence pattern builder set forth further below. However, the method of fabrication is not specifically limited as far as the layers have regions of differing birefringence.

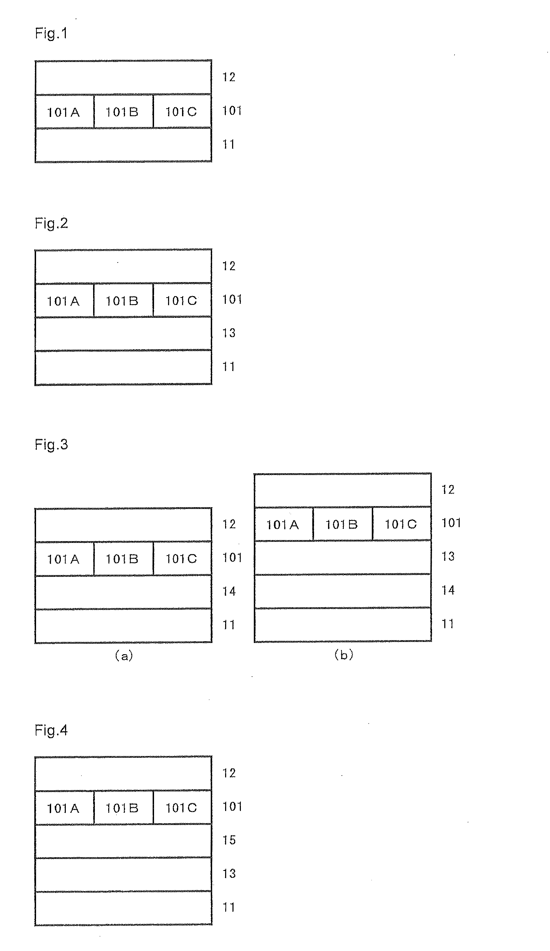

Figures 1 to 7 are examples of the birefringence pattern transfer foil of the present invention. The birefringence pattern transfer foil has a temporary support 11, at least one patterned optically anisotropic layer 101, and an adhesive layer 12.
In the drawings, the regions of differing birefringence are denoted as 101A, 101B, and 101C.

The birefringence pattern transfer foil shown in Figure 1 is the most basic birefringence pattern transfer foil and has a patterned optically anisotropic layer 101 and an adhesive layer 12 on a temporary support 11.

The birefringence pattern transfer foil shown in Figure 2 is an example having a detachment layer 13 between temporary support 11 and patterned optically anisotropic layer 101. Detachment layer 13 forms a readily detachable interface with the temporary support, and functions to allow smooth detachment of temporary support 11.

The birefringence pattern transfer foil shown in Figs. 3(a) and (b) is an example having a releasing layer 14 between temporary support 11 and patterned optically anisotropic layer 101. Releasing layer 14 also has the function of facilitating the release of temporary support 11. However, while detachment layer 13 forms a detachment interface with temporary support 11, releasing layer 14 forms a detachment interface with the layer above it (for example, the patterned optically anisotropic layer). As shown in Figure 3(b), there are also cases where both detachment layer 13 and releasing layer 14 are present. In such cases, the detachment interface lies between detachment layer 13 and releasing layer 14.

The birefringence pattern transfer foil shown in Figure 4 is an example having an orientation layer 15. When employing a patterned optically anisotropic layer 101 formed from an optically anisotropic layer formed by coating and drying a solution containing a liquid crystal compound to form a liquid crystal phase and conducting heating or irradiation with light for polymerization and fixing, orientation layer 15 functions to facilitate orientation of the liquid crystal compound.

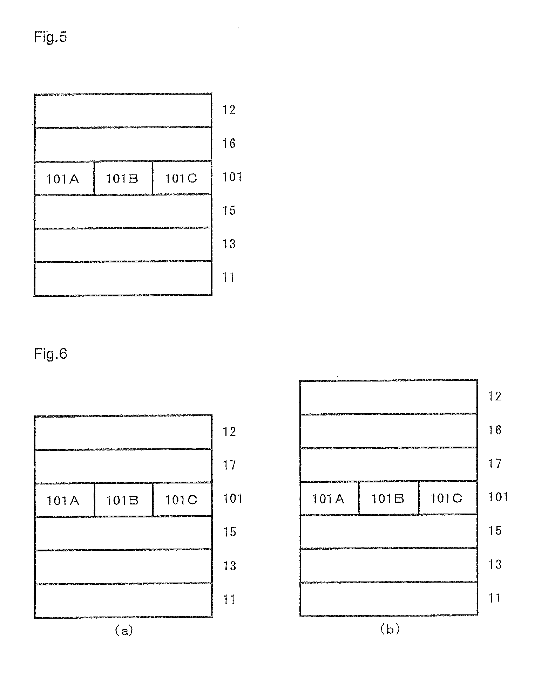

Figure 5 is an example of a birefringence pattern transfer foil having a printed layer 16. The printed layer is generally laminated over an invisible birefringence pattern to impart a visible image. However, for example, invisible security printing based on a UV fluorescent dye, an IR dye, or the like can also be used. The printed layer can be above or below the optically anisotropic layer, or, if the printed layer is transparent, the configuration can be one in which the printing and latent image are viewed superimposed in the course of using a filter to render a latent image that is based on a birefringence pattern visible.

The birefringence pattern transfer foil shown in Figures 6(a) and (b) has an additive layer 17 on a patterned optically anisotropic layer. As set forth further below, the additive layer is a layer for the subsequent addition of a plasticizer and a photopolymerization initiator to the optically anisotropic layer in a birefringence pattern builder. In addition, as needed, functions can be imparted in the form of an undercoat layer to strengthen adhesion between layers in the birefringence pattern transfer foil, a hard coat layer to protect the surface during manufacturing, a shielding layer that prevents infrared radiation from passing through to preclude viewing with an infrared camera, a water immersion detection layer that discolors or the like when immersed in water to detect water immersion, a thermotropic layer that changes colors based on temperature, a collored filter layer that controls the color of the latent image, a magnetic layer imparting a magnetic recording property, a matting layer, a scattering layer, a lubricating layer, and the like.

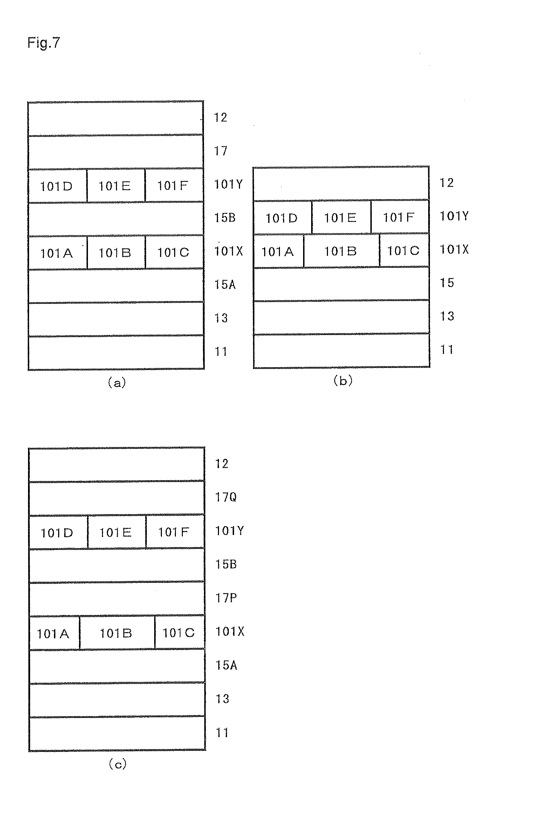

The birefringence pattern transfer foil shown in Figures 7(a) to (c) has multiple patterned optically anisotropic layers. The in-plane slow axes of the multiple optically anisotropic layers can be identical or different, but are preferably different. The regions of differing birefringence of the multiple optically anisotropic layers can be mutually identical or different. Although not shown, there can be three or more patterned optically anisotropic layers. Two or more optically anisotropic layers of mutually differing retardation or slow axes can be provided to impart mutually independent patterns, and a latent image with a multi-color function can be formed.

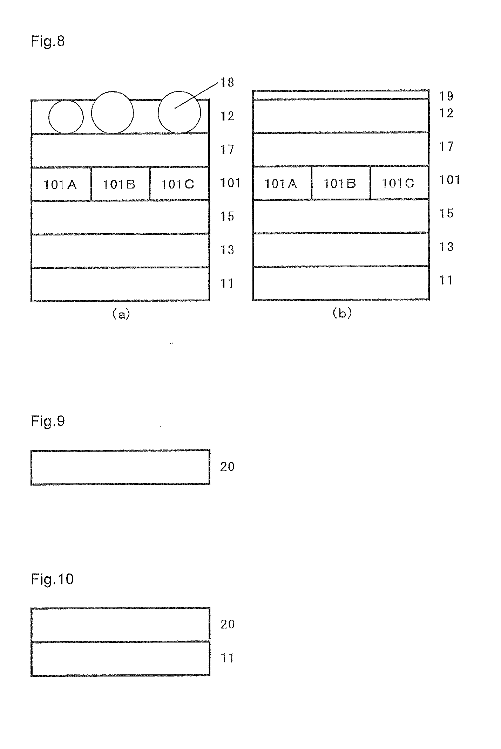

The birefringence pattern transfer foil shown in Figures 8(a) and (b) is an example having a blocking prevention means. The blocking prevention means prevents the phenomenon (blocking) of the surface of the birefringence pattern transfer foil adhering during storage and serves to enhance the storage property of the birefringence pattern transfer foil. Figure 8(a) is an example in which microparticles 18 have been added to the adhesive layer as a blocking prevention means, and Figure 8(b) is an example in which a cover film 19 has been applied to the surface of the adhesive layer as a blocking prevention means.

### [The birefringence pattern builder]

The method of fabricating the above patterned optically anisotropic layer is not specifically limited. The method employing a birefringence pattern builder that is indicated below is an example. A birefringence pattern builder refers to a material for fabricating a patterned optically anisotropic layer and a material that can be made into a patterned optically anisotropic layer by a prescribed process. By subjecting a birefringence pattern builder to a prescribed process to fabricate a patterned optically anisotropic layer, and forming additional layers as needed, it is possible to fabricate a birefringence pattern transfer foil.

For example, when employing a birefringence pattern builder having photosensitivity such as that described in Japanese Unexamined Patent Publication (KOKAI) No. 2009-175208, it is possible to control the retardation of irradiated portions by means of the level of exposure. It is also possible to keep the retardation of unexposed portions to essentially 0. Employing such a birefringence pattern builder makes it possible to readily fabricate a birefringence pattern transfer foil having a patterned optically anisotropic layer imparted with a desired birefringence pattern.

The birefringence pattern builder can normally be in the form of a film or sheet. The birefringence pattern builder can consist of only an optically anisotropic layer, or can additionally include functional layers imparting various secondary functions. Examples of functional layers are a support, an orientation layer, and a reflective layer. A birefringence pattern builder employed as a transfer material, a birefringence pattern builder prepared using a transfer material, or the like can include a temporary support and a layer controlling mechanical characteristics. Since the material is subsequently employed in a birefringence pattern transfer foil, a detachment layer, releasing layer, adhesive layer, and the like that function in birefringence pattern transfer foils can also be present.

The birefringence pattern builder shown in Figure 9 is an example of a birefringence pattern builder that has an optically anisotropic layer 20 having its own support.
The optically anisotropic layer is a birefringent layer, and can be in the form of a layer in which a uniaxially or biaxially-stretched polymer or an oriented liquid-crystal compound has been fixed, an organic or inorganic single-crystal layer of aligned orientation, or the like. The optically anisotropic layer is preferably a layer that has the function of permitting control of the optical anisotropy at will through patterned light exposure such as exposure to light through a photomask or digital exposure; patterned heating such as with a hot stamp, thermal head, or infrared light laser beam exposure; stylus drawing by mechanically applying pressure or shear with a pin or pen; printing a reactive compound; or the like. This is because an optically anisotropic layer having such a function facilitates the obtaining of a patterned optically anisotropic layer by the method set forth further below. The use of patterned light exposure such as exposure to light through a photomask or scanning optical exposure is preferable for pattern formation. The patterning step can be combined with bleaching, development, or the like by means of heat or chemicals as needed in forming a pattern. In that case, heat bleaching and development are preferable because they place few limitations on the support.

Figure 10 is an example having an optically anisotropic layer 20 on a temporary support 11 that is employed as a birefringence pattern transfer foil.

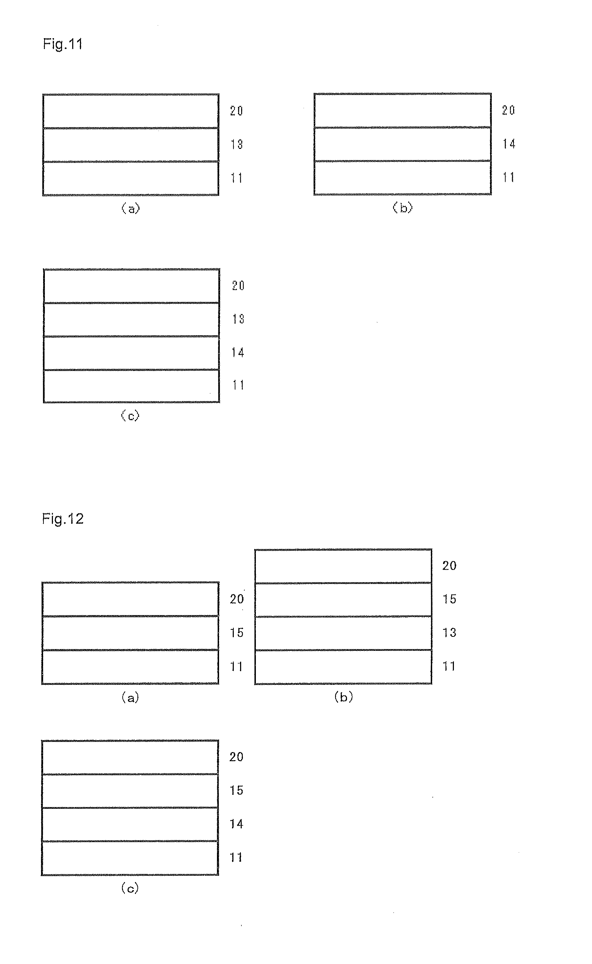

Figures 11 (a) to (c) are examples of birefringence pattern builders having detachment layers 13 and/or releasing layers 14 for subsequent use as birefringence pattern transfer foils. Although detachment layer 13 and releasing layer 14 are functional layers that perform functions in a birefringence pattern transfer foil, they can be formed along the way in the birefringence pattern builder, as needed.

The birefringence pattern builders shown in Figures 12(a) to (c) are examples having an orientation layer 15. When a layer that has been formed by applying and drying a liquid containing a liquid crystal compound to form a liquid crystal phase, and conducting heating or light irradiation for polymerization and fixation is employed as optically anisotropic layer 20, orientation layer 15 functions as a layer that facilitates orientation of the liquid crystal compound.

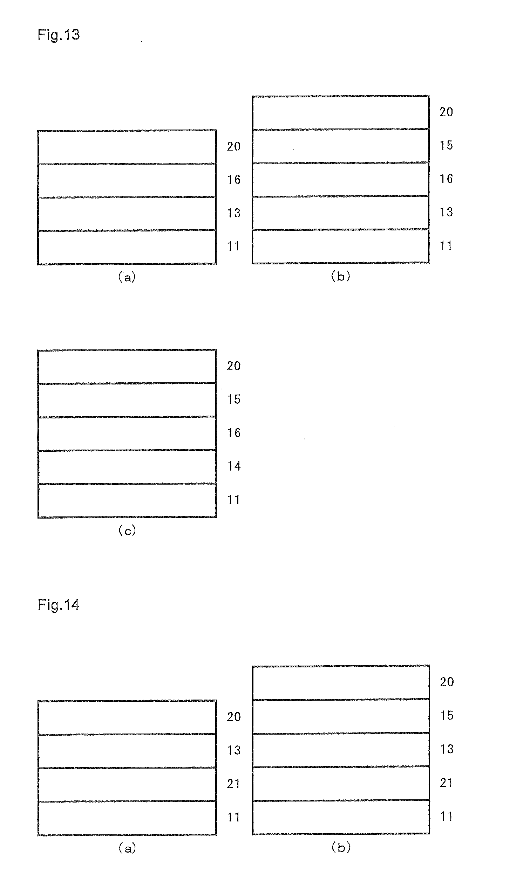

Figures 13(a) to (c) are examples of birefringence pattern builders having printed layers 16. Printed layer 16 functions as a functional layer in a birefringence pattern transfer foil, and can be formed as needed along the way in the preparation of a birefringence pattern builder.

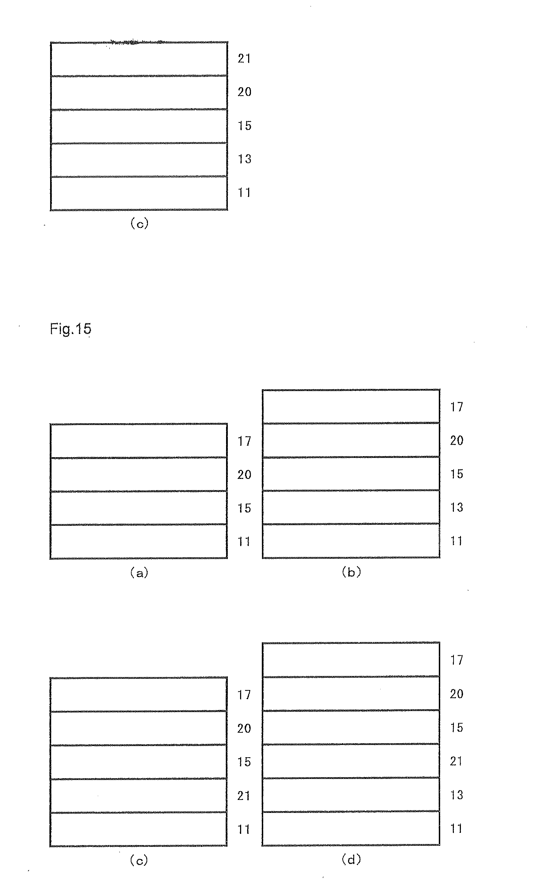

Figures 14(a) to (c) are examples of birefringence pattern builders having a reflective layer 21. The reflective layer 21 in the birefringence pattern builder has the effects of rendering the exposure more efficient in the manufacturing process and simplifying the evaluation of optical characteristics of the optical anisotropic layer in the manufacturing process. The reflective layer or semireflective layer that is used to adjust visibility in the birefringence pattern transfer foil can be provided in the stage of the birefringence pattern builder.

Figures 15(a) to (d) are examples of birefringence patterns having an additive layer 17 on the optical anisotropic layer. The additive layer is a layer for subsequently adding additives such as plasticizers, thermal polymerization inhibitors, and photopolymerization initiators to the optically anisotropic layer. As needed, it is possible to impart a separate function that is exhibited in the birefringence pattern builder or in the birefringence pattern transfer foil.

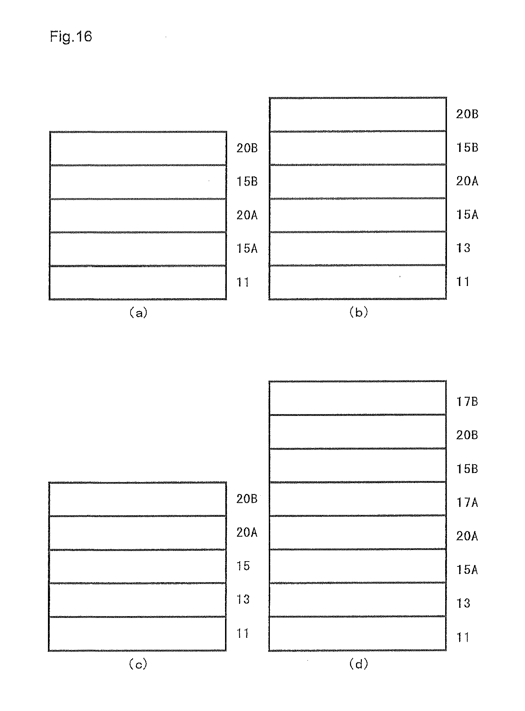

The birefringence pattern builders shown in Figures 16(a) to (d) have multiple optically anisotropic layers. The in-plane slow axes of the multiple optically anisotropic layers can be identical or different. However, they are preferably different. Although not shown, there can be three or more optically anisotropic layers. It is preferable for an orientation layer to be present when the optically anisotropic layer is formed of a liquid crystal compound. However, the optically anisotropic layer itself can double as an orientation layer and the orientation layer can be omitted, as shown in Figure 16(c).

### [The article to which a birefringence pattern has been transferred]

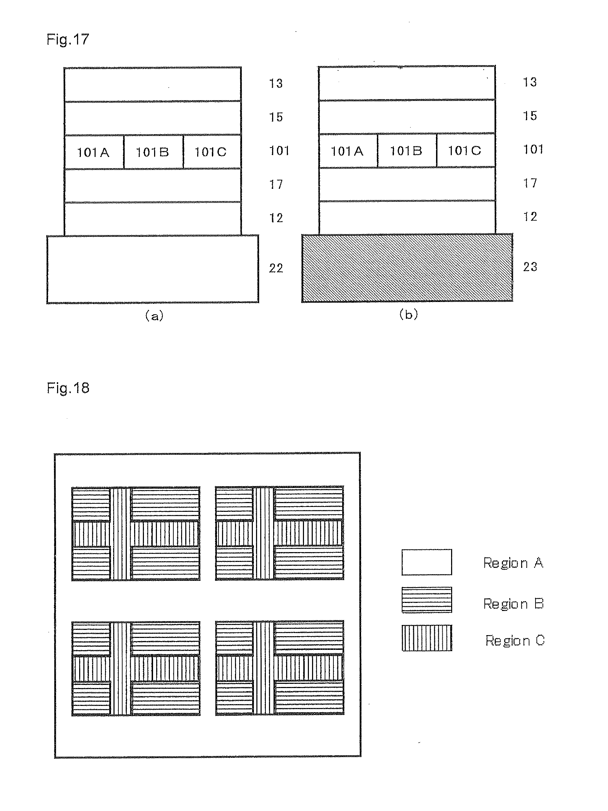

Figure 17 is an example of an article having a birefringence pattern that has been transferred using the birefringence pattern transfer foil of the present invention.
The articles having birefringence patterns shown in Figures 17(a) and (b) are comprised of a transparent article having a birefringence pattern and a reflective article having a birefringence pattern, respectively.
In the case of the transparent article, the light source and the observation point are on opposite sides of patterned optically anisotropic layer 101 that has been transferred to transparent article main body 22. In that case, light exiting a polarized light source prepared using a polarizing filter or the like passes through the article having a birefringence pattern, adopting a different polarized state in-plane. It then passes through another polarizing filter on the observation point side, rendering the information visible. Here, the polarizing filter can be a linear polarizing filter, a circular polarizing filter, or an elliptical polarizing filter, and the polarizing filter itself can have a birefringence pattern or a dichroic pattern.

In the case of the reflective article, the light source and the observation point are both on the same side as viewed from patterned optically anisotropic layer 101 transferred onto reflective article main body 23. A reflective surface (in this case, the outer surface of reflective article main body 23) is present on the opposite side from them. In that case, the light exiting a polarized light source prepared using a polarizing filter passes through the article having a birefringence pattern, adopting a different polarized state in-plane. It reflects off the reflective surface, passing back through the article having a birefringence pattern, during which it is again affected. Finally, it passes through the polarizing filter on the observation point side, rendering the information visible. Here, the polarizing filter can be a linear polarizing filter, a circular polarizing filter, or an elliptical polarizing filter, and the polarizing filter itself can have a birefringence pattern or a dichroic pattern. The same polarizing filter can be used for the light source and observation. The reflective surface can double as a highly reflective hologram layer, electrode layer, or the like.

The reflective surface can be a semitransparent-semireflective layer that partially reflects light and partially passes light. In that case, not only can the article having the birefringence pattern render both transmitted and reflected images visible, but it can permit the visual recognition, from above the patterned optically anisotropic layer and without a filter, of common information such as text or images on the lower side of the semitransparent-semireflective layer of the article having a birefringence pattern.

The birefringence pattern transfer foil, the birefringence pattern builder that is one of materials of the birefringence pattern transfer foil, the method of manufacturing the birefringence pattern transfer foil employing the birefringence pattern builder, the materials constituting the above, and a method of fabricating the above, and the like will be described in detail below. The present invention is not limited to the embodiments described below, and implementations of other embodiments are possible by referring to the description set forth below and to conventionally known methods.

### [The optically anisotropic layer]

The optically anisotropic layer in the birefringence pattern builder is a layer from which a patterned optically anisotropic layer is made, and a layer having optical properties such that the retardation in at least one direction of incidence is essentially 0 when measured, that is, a layer that is not isotropic.

Examples of the optically anisotropic layer in the birefringence pattern builder include a layer containing at least one monomer and/or oligomer; a layer containing at least one polymer; and a layer containing at least one organic or inorganic single crystal. The polymer may also be a cured product of at least one monomer and/or oligomer

An optically anisotropic layer containing a polymer is preferred from the perspective of being able to satisfy various different requirements, such as birefringence, transparency, resistance to solvents, toughness, and flexibility. The polymer in the optically anisotropic layer preferably contains an unreacted reactive group. When crosslinking of polymer chains occurs due to the reaction of unreacted reactive groups when exposed to light, the degree of crosslinking of polymer chains varies due to exposure to light under different conditions. As a result, the retardation level changes, which is considered to facilitate the formation of a birefringence pattern.

The optically anisotropic layer is preferably solid at 20°C, more preferably solid at 30°C, and still more preferably, solid at 40°C. This is because the application of other functional layers, transfer and bonding (before the formation of the pattern) to the support, and the like are facilitated when the optically anisotropic layer is solid at 20°C.

When other functional layers are applied to the optically anisotropic layer, the optically anisotropic layer preferably has resistance to solvents. In the present description, the phrase "has resistance to solvents" means that the retardation following immersion for two minutes in the target solvent falls within a range of 30 % to 170 %, preferably falls within a range of 50 % to 150 %, and optimally falls within a range of from 80 % to 120 % of the retardation prior to the immersion. The target solvent depends on the solvent used for the application of the functional layers, examples of target solvents are water, methanol, ethanol, isopropanol, acetone, methyl ethyl ketone, cyclohexanone, propylene glycol monomethyl ether acetate, N-methyl pyrrolidone, hexane, chloroform, and ethyl acetate, and mixed solvents thereof.

The optically anisotropic layer preferably may have a retardation of 5 nm or higher at 20°C. A retardation of 10 nm or higher and 10,000 nm or lower is preferable, and a retardation of 20 nm or higher and 2,000 or lower is optimal. At a retardation of 5 nm or lower, the formation of a birefringence pattern may become difficult. When the retardation exceeds 10,000 nm, the error increases and it sometimes becomes difficult to achieve a precision permitting practical use.

The method of preparing the optically anisotropic layer is not specifically limited. Examples include: the preparation method of applying and drying a solution containing a liquid-crystal compound having at least one reactive group to form a liquid-crystal phase, and then heating it or irradiating it with light to fix it by polymerization; the preparation method of stretching a layer in which a monomer having two or more reactive groups has been fixed by polymerization; the method of stretching a layer comprised of a polymer having a reactive group in a side chain; and the method of stretching a layer comprised of a polymer and then using a coupling agent or the like to introduce a reactive group. As set forth further below, the optically anisotropic layer can be formed by transfer. The thickness of the optically anisotropic layer is preferably 0.1 to 20 micrometers and more preferably 0.5 to 10 micrometers.

### [An optically anisotropic layer in which a composition containing a liquid-crystal compound has been oriented and fixed]

The case where the optically anisotropic layer is prepared by applying and drying a solution containing a liquid-crystal compound having at least one reactive group to form a liquid-crystal phase, and then heating it or irradiating it with light to fix it by polymerization will be described below. This preparation method is preferable to the method of preparation by stretching a polymer to obtain an optically anisotropic layer set forth further below in that it readily yields an optically anisotropic layer of equivalent retardation in a thin film.

### [The liquid-crystal compound]

Generally, liquid-crystal compounds can be grouped into rod-like-types and discotic-types based on their shape. Each of these also includes low molecular and high molecular types. "High molecular" generally refers to a degree of polymerization of 100 or higher (High Molecular Physics - Phase Transition Dynamics, Masao Doi, p. 2, Iwanami Shoten, 1992). In the present invention, any liquid-crystal compound can be employed, but the use of a rod-like liquid-crystal compound is preferred.

In the present description, it is not necessary for a compound having liquid crystallinity to be contained in the layer that is formed from a composition containing a liquid-crystal compound. For example, the layer may contain a high-molecular weight compound, no longer exhibiting liquid crystallinity, which is formed by carrying out polymerization or crosslinking reaction of the low molecular liquid-crystal compound having a reactive group capable of thermal reaction or photo reaction under heating or under irradiation of light. Further, two or more rod-like liquid-crystal compounds, two or more discotic liquid-crystal compounds, or a mixture of a rod-like liquid-crystal compound and a discotic liquid-crystal compound can be employed as the liquid-crystal compound. Since temperature change and humidity change can be reduced, use of discotic liquid-crystal compounds or rod-like liquid-crystal compounds having reactive groups is preferable. It is of still greater preference for at least one of them to contain two or more reactive groups per liquid-crystal molecule. In the case of a mixture of two or more liquid-crystal compounds, at least one of them preferably have two or more reactive groups.

A liquid-crystal compound having two or more reactive groups with different crosslinking mechanisms is preferably employed. An optically anisotropic layer containing a polymer having an unreacted reactive group can then be prepared by causing just a portion of the two or more reactive groups to polymerize through the selection of conditions. The crosslinking mechanism is not specifically limited, and can consist of a condensation reaction, hydrogen bonding, polymerization, or the like. Of the two or more mechanisms, at least one is preferably polymerization, and the use of two or more different forms of polymerization is preferable. Generally, not only the vinyl groups, (meth)acrylic groups, epoxy groups, oxetanyl groups, and vinyl ether groups that are employed in polymerization, but also hydroxyl groups, carboxylic acid groups, amino groups, and the like can be employed in the crosslinking reaction.

In the present description, the phrase "a compound having two or more reactive groups with different crosslinking mechanisms" means a compound that can be crosslinked in stages with different crosslinking reaction steps. In the crosslinking reaction step of each stage, a reactive group reacts as a functional group according to its respective crosslinking mechanism. Further, for example, in the case of a polymer such as a polyvinyl alcohol having a hydroxyl group in a side chain, when the hydroxyl group in the side chain has been crosslinked with an aldehyde or the like following the polymerization reaction that polymerizes the polymer, two or more different crosslinking mechanisms have been employed. However, in the present description, a compound having two or more different reactive group preferably means a compound having two or more different reactive groups in a layer at the point where the layer has been formed on a support or the like, and the reactive groups therein can be subsequently crosslinked in stages. As a particularly preferable embodiment, the use of a liquid-crystal compound having two or more polymerizable groups is preferred. The reaction conditions causing crosslinking in stages can be different temperatures, different wavelengths of light (the radiation of light), or different polymerization mechanisms. From the perspective of separating the reaction, the use of different polymerization mechanisms is preferred, and control by means of the type of initiator employed is preferable. The combination of a radically polymerizable group and a cationically polymerizable group as polymerization mechanisms is preferred. A combination in which the radically polymerizable group is a vinyl group or (meth)acrylic group, and the cationically polymerizable group is an epoxy group, oxetanyl group, or vinyl ether group is particularly preferred because of the ease of controlling the polymerization properties. Examples of reactive groups are given below.

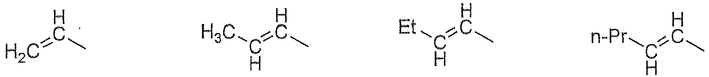

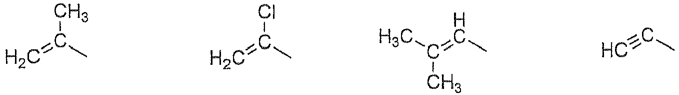

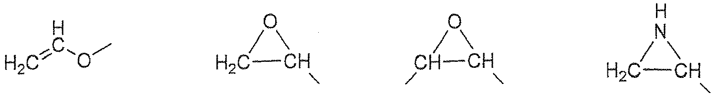

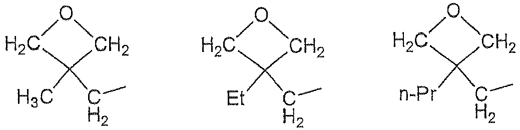

-SH -OH -NH₂

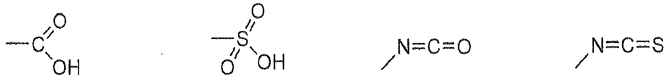

Azomethines, azoxy compounds, cyanobiphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, tolanes, and alkenyl cycohexylbenzonitriles are preferably employed as rod-like liquid-crystal compounds. Not only low molecular liquid-crystal compounds such as the above, but high molecular liquid-crystal compounds can also be employed. These high molecular liquid-crystal compounds are obtained by polymerizing low molecular rod-like liquid-crystal compounds having a reactive group. Examples of rod-like liquid-crystal compounds are those described in Japanese Unexamined Patent Publication (KOKAI) No. 2008-281989, Published Japanese Translation (TOKUHYO) Heisei No. 11-513019 of a PCT International Application (WO97/00600), and Published Japanese Translation (TOKUHYO) No. 2006-526165 of a PCT International Application (WO2004/090025).

Specific examples of rod-like liquid-crystal compounds are given below. However, the present invention is not limited thereto. The compounds represented by general formulas (I) can be synthesized by the method described in Published Japanese Translation (TOKUHYO) Heisei No. 11-513019 of a PCT International Application (WO97/00600).

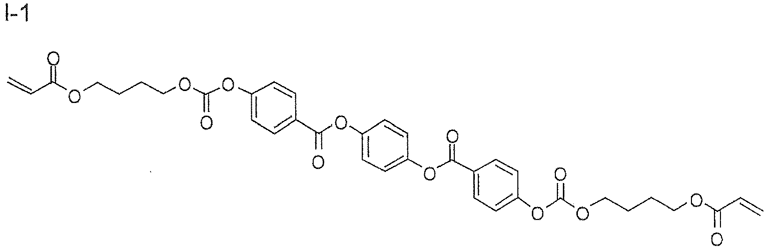

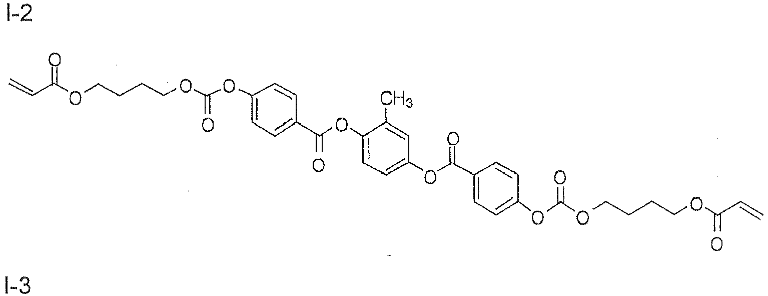

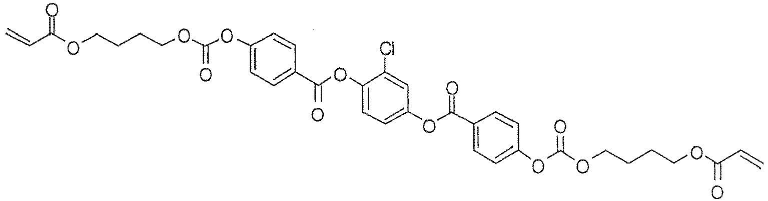

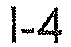

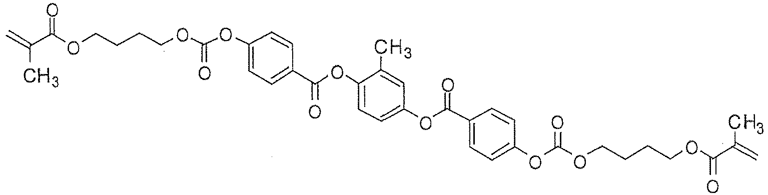

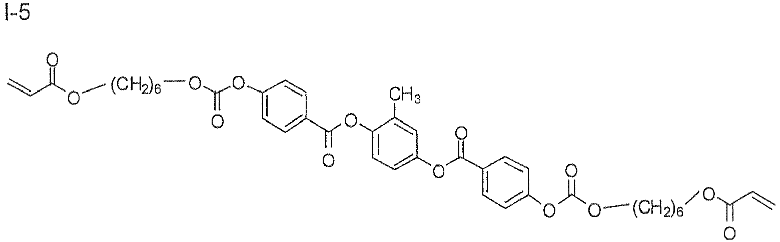

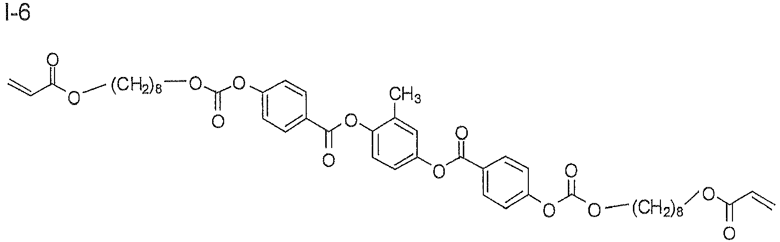

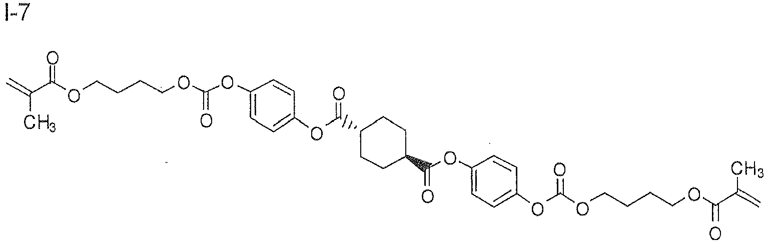

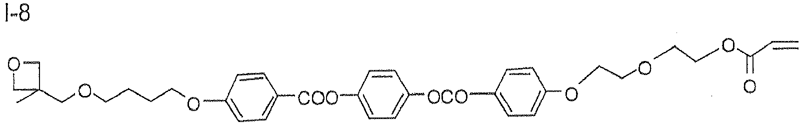

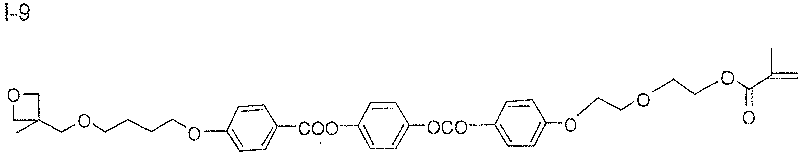

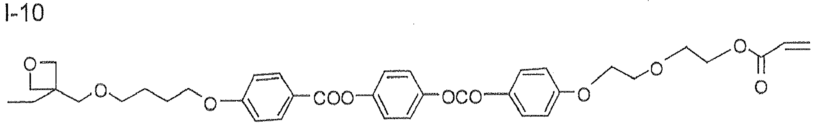

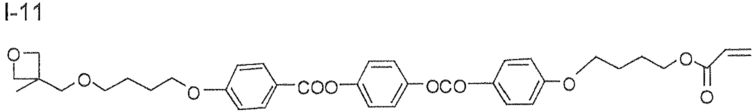

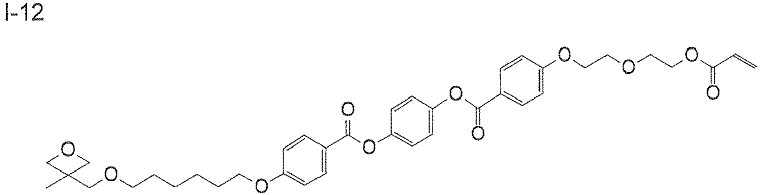

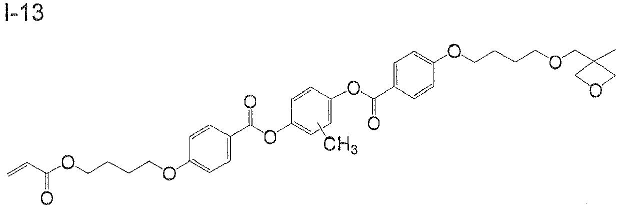

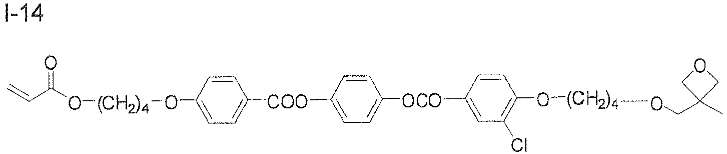

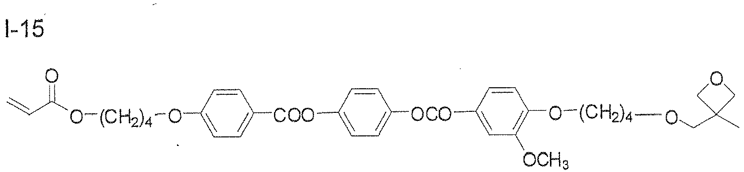

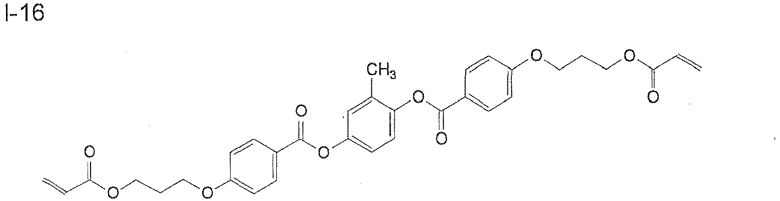

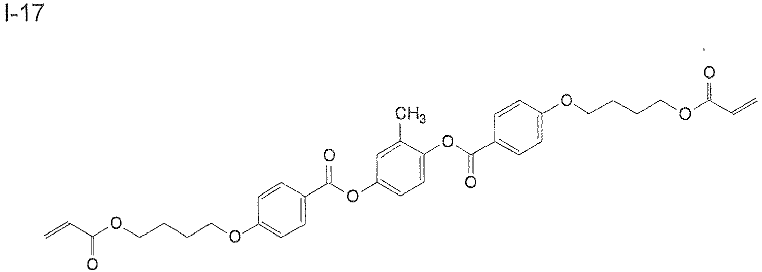

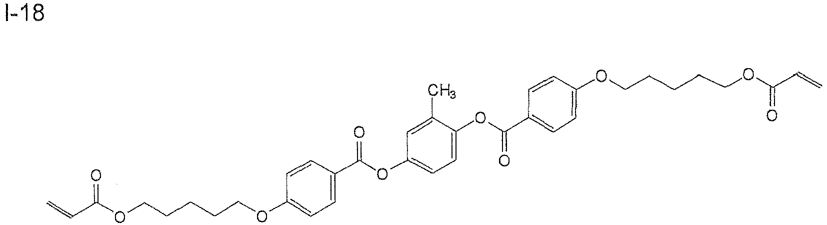

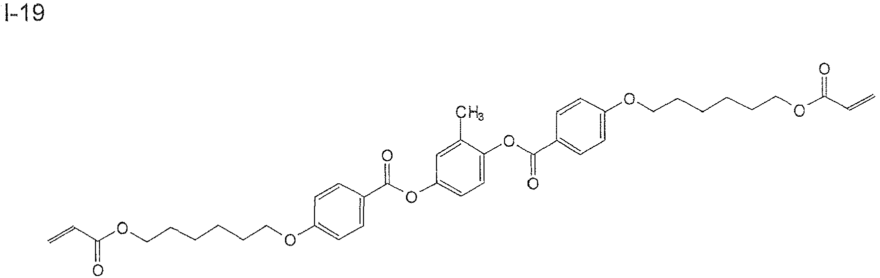

In another embodiment of the present invention, discotic liquid crystals are employed in the optically anisotropic layer. The optically anisotropic layer is preferably a layer of low-molecular-weight discotic liquid-crystal compounds such as monomers, or a layer of polymers obtained by polymerizing (curing) polymerizable discotic liquid-crystal compounds. Examples of discotic liquid-crystal compounds include the benzene derivatives described in the research report of C. Destrade et al., Mol. Cryst. Vol. 71, p. 111 (1981); the truxene derivatives described in the research report of C. Destrade et al., Mol. Cryst. Vol. 122, p. 141 (1985), Physics Lett, A, Vol. 78, p. 82 (1990); the cyclohexane derivatives described in the research report of B. Kohne at el., Angew. Chem. Vol. 96, p. 70 (1984); and the aza crown and phenyl acetylene macrocycles described in the research report of J. M. Lehn et al., J. Chem. Commun., p. 1,794 (1985) and the research report of J. Zhang et al., J. Am. Chem. Soc., Vol. 116, p. 2,655 (1994). These discotic liquid-crystal compounds generally have a structure with a discotic base nucleus at the center of the molecule, and groups, such as linear alkyl groups, alkoxy groups, and substituted benzoyloxy groups, substituted radially. They exhibit liquid crystallinity, and include all compounds generally referred to as discotic liquid crystals. When an aggregate of such molecules is oriented uniformly, it exhibits a negative uniaxial property. However, this description is not a limitation. The compounds described in paragraphs [0061] - [0075] of Japanese Unexamined Patent Publication (KOKAI) No. 2008-281989 are examples of discotic liquid-crystal compounds.

When employing a discotic liquid-crystal compound having a reactive group as a liquid-crystal compound, it can be fixed in any of the orientation states of horizontal orientation, vertical orientation, inclined orientation, and twisted orientation. In the present description, the term "horizontal orientation" refers, in the case of rod-like liquid crystals, to the major axis of the molecule being parallel to the horizontal surface of the support, and refers, in the case of discotic liquid crystals, to the disc surface of the core of the discotic liquid crystal compound being parallel to the horizontal surface of the support. However, it is not required that they be strictly parallel; in the present description, this refers to an orientation with an angle of incline relative to the horizontal surface of less than 10 degrees. The optically anisotropic layer preferably includes a layer in which rod-like liquid crystal compounds are fixed in the state of horizontal orientation.

In the composition containing a liquid-crystal compound that is used to form the optically anisotropic layer by fixation of the orientation of the compounds, a polymerizable monomer can be added to promote crosslinking of the liquid-crystal compound.
A monomer or oligomer undergoing addition polymerization when irradiated with light and having two or more ethylenic unsaturated double bonds can be employed as the polymerizable monomer, for example.
Examples of such monomers and oligomers include compounds having at least one addition polymerizable ethylenic unsaturated group per molecule. Examples include monofunctional acrylates and monofunctional methacrylates such as polyethylene glycol mono(meth)acrylate, polypropylene glycol mono(meth)acrylate, and phenoxyethyl (meth)acrylate; and polyfunctional acrylates and polyfunctional methacrylates such as compounds that have been (meth)acrylated after adding an ethylene oxide or propylene oxide to a polyfunctional alcohol such as trimethylolpropane or glycerin: polyethylene glycol di(meth)acrylate, polypropylene glycol di(meth)acrylate, trimethylol ethane triacrylate, trimethylol propane tri(meth)acrylate, trimethylol propane diacrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexane diol di(meth)acrylate, trimethylol propane tri(acryloyloxypropyl)ether, tri(acryloyloxyethyl)isocyanurate, tri(acryloyloxyethyl)cyanurate, and glycerin tri(meth)acrylate.

Further examples include the urethane acrylates described in Japanese Examined Patent Publication (KOKOKU) Showa No. 48-41708, Japanese Examined Patent Publication (KOKOKU) Showa No.50-6034, and Japanese Unexamined Patent Publication (KOKAI) Showa No. 51-37193; the polyester acrylates described in Japanese Unexamined Patent Publication (KOKAI) Showa No. 48-64183, Japanese Examined Patent Publication (KOKOKU) Showa No. 49-43191 and Japanese Examined Patent Publication (KOKOKU) Showa No. 52-30490; and polyfunctional acrylates and methacrylates such as epoxyacrylates that are the reaction products of an epoxy resin with (meth)acrylic acid.

Of these, trimethylol propane tri(meth)acrylate, pentaerythritol tetra(meth)acrylate, dipentaerythritol hexa(meth)acrylate, and dipentaerythritol penta(meth)acrylates are preferred.
An additional suitable example includes the "polymerizable compound B" described in Japanese Unexamined Patent Publication (KOKAI) Heisei No. 11-133600.
These monomers and oligomers can be employed singly or in mixtures of two or more.

Cationically polymerizable monomers can also be employed. Examples include the epoxy compounds, vinyl ether compounds, oxetane compounds and the like that are given by way of example in Japanese Unexamined Patent Publications (KOKAI) Heisei No. 6-9714, No. 2001-31892, No. 2001-40068, No. 2001-55507, No. 2001-310938, No. 2001-310937, and No. 2001-220526.

Examples of epoxy compounds include the aromatic epoxides, alicyclic epoxides, and aliphatic epoxides given below.
Examples of aromatic epoxides include bisphenol A, di- or polyglycidyl ethers of alkyleneoxide adducts thereof, hydrogenated bisphenol A and di- or polyglycidyl ethers of alkylene oxide adducts thereof, and novolac epoxy resins. Examples of alkylene oxides are ethylene oxide and propylene oxide.

Examples of alicyclic epoxides include cyclohexene oxide and cyclopentene oxide-containing compounds obtained by epoxylating a compound having at least one cycloalkane ring such as a cyclohexene or cyclopentene ring with a suitable oxidizing agent such as hydrogen peroxide or peroxide. Preferred examples of aliphatic epoxides include aliphatic polyalcohols and di- and polyglycidyl ethers of alkylene oxide adducts thereof. Representative examples include: diglycidyl ethers of ethylene glycol, diglycidyl ethers of propylene glycol, diglycidyl ethers of 1,6-hexanediol, and other diglycidyl ethers of alkylene glycols; polyglycidyl ethers of polyalcohols such as di- or tri-glycidyl ethers of glycerin or alkylene oxide adducts thereof; diglycidyl ethers of polyethylene glycols or alkylene oxide adducts thereof; diglycidyl ethers of polypropylene glycol or alkylene oxide adducts thereof; and other diglycidyl ethers of polyalkylene glycols. Examples of the alkylene oxide include ethylene oxide and propylene oxide.

A monofunctional or difunctional oxetane monomer can be employed as a cationically polymerizable monomer in the composition of the present invention. For example, compounds such as 3-ethyl-3-hydroxymethyloxetane (product name OXT101 manufactured by Toagosei Co., Ltd.), 1,4-bis[(3-ethyl-3-oxetanyl)methoxymethyl]benzene (OXT121, same manufacturer), 3-ethyl-3-(phenoxymethyl)oxetane (OXT211, same manufacturer), di(1-ethyl-3-oxetanyl)methylether (OXT221, same manufacturer), and 3-ethyl-3-(2-ethylhexyloxymethyl)oxetane (OXT212, same manufacturer) are preferably employed. In particular, compounds such as 3-ethyl-3-hydroxymethyloxetane, 3-ethyl-3-(phenoxymethyl)oxetane, and di(1-ethyl-3-oxetanyl)-methylether, and all known functional and difunctional oxetane compounds described in Japanese Unexamined Patent Publication (KOKAI) Nos. 2001-220526 and 2001-310937 can be employed.

When two or more optically anisotropic layers each of which is comprised of a composition containing liquid-crystal compounds is laminated, the combination of the liquid-crystal compounds is not specifically limited. Laminates of layers all comprised of rod-like liquid-crystal compounds, laminates of layers comprised of compositions containing discotic liquid-crystal compounds and compositions containing rod-like liquid-crystal compounds, and laminates of layers all comprised of discotic liquid-crystal compounds can all be employed. Nor is the combination of the orientation state of the various layers specifically limited. Laminates of optically anisotropic layers of identical orientation states can be employed, and laminates of optically anisotropic layers of differing orientation states can be employed.

### [The solvent]

An organic solvent is preferably used to prepare a coating liquid, which is used when the composition containing a liquid-crystal compound is applied on the surface of a support or an orientation layer or the like in the form of the coating liquid, described further below. Examples of organic solvents include: amides (such as N,N-dimethylformamide), sulfoxides (such as dimethylsulfoxide), heterocyclic compounds (such as pyridine), hydrocarbons (such as benzene and hexane), alkyl halides (such as chloroform and dichloromethane), esters (such as methyl acetate and butyl acetate), ketones (such as acetone, methyl ethyl ketone, methyl isobutyl ketone, and cyclohexanone), and ethers (such as tetrahydrofuran and 1,2-dimethoxyethane). Two or more organic solvents can be employed in combination. The alkyl halides, esters, ketones, and combinations thereof are preferred.

### [Fixing the orientation]

The orientation of the liquid-crystal compound is preferably fixed by a crosslinking reaction of reactive groups introduced into the liquid-crystal compound, and more preferably fixed by a polymerization reaction of reactive groups. Polymerization reactions include a thermal polymerization reaction employing a thermal polymerization initiator and a photopolymerization reaction employing a photopolymerization initiator. A photopolymerization reaction is preferred. The photopolymerization reaction can be a radical polymerization or a cation polymerization. Examples of radical polymerization initiators includeα-carbonyl compounds (described in U.S. Patents 2,367,661 and 2,367,670), acyloin ethers (described in U.S. Patent 2,448,828), α-hydrocarbon-substituted aromatic acyloin compounds (described in U.S. Patent 2,722, 512), polynucleic quinone compounds (described in U.S. Patents 3,046,127 and 2,951,758), combinations of triarylimidazole dimers and p-aminophenyl ketones (described in U.S. Patent 3,549,367), acrylidine and phenazine compounds (described in Japanese Unexamined Patent Publication (KOKAI) Showa No. 60-105667 and U.S. Patent 4,239,850), and oxadiazole compounds (described in U.S. Patent 4,212,970). Examples of cation photopolymerization initiators include organic sulfonium salts, iodonium salts, and phosphonium salts. The organic sulfonium salts are preferred, and triphenylsulfonium salts are particularly preferred. Hexafluoroantimonate, hexafluorophosphate, and the like are preferably employed as the counter ions of these compounds.

The quantity of photopolymerization initiator employed is preferably 0.01 to 20 weight %, more preferably 0.5 to 5 weight % of the solid component of the coating liquid. Ultraviolet radiation is preferably employed in the light irradiation to polymerize the liquid-crystal compound. The irradiation energy is preferably 10 mJ/cm² to 10 J/cm², more preferably 25 to 1000 mJ/cm². The illuminance is preferably 10 to 2,000 mW/cm², more preferably 20 to 1500 mW/cm², and still more preferably, 40 to 1000 mW/cm². The illumination wavelength preferably has a peak at 250 to 450 nm, and more preferably has a peak at 300 to 410 nm. To promote the photopolymerization reaction, the photoillumination can be conducted in an atmosphere of an inert gas such as nitrogen or under heated conditions.

### [Optical orientation by irradiation with polarized light]

The optically anisotropic layer can be a layer in which in-plane retardation is manifested or increased by optical orientation by irradiation with polarized light. Irradiation with polarized light can be conducted by referring to the description given in paragraphs [0091] and [0092] of Japanese Unexamined Patent Publication (KOKAI) No. 2009-69793, the description given in Published Japanese Translation (TOKUHYO) No. 2005-513241 of a PCT International Application (International Publication WO2003/054111), and the like.

### [Fixing the orientation state of a liquid-crystal compound having a radically reactive group and a cationically reactive group]

As set forth above, the liquid-crystal compound preferably has two or more reactive groups of differing polymerization conditions. In that case, an optically anisotropic layer containing a polymer having an unreacted reactive group can be prepared by polymerizing only a portion of the multiple types of reactive groups through the selection of conditions. Polymerization fixing conditions that are particularly suited to the case where a liquid-crystal compound having a radically reactive group and a cationically reactive group (specific examples of which are I-8 to I-15 above) is employed as such a liquid-crystal compound are described below.

First, it is preferable to employ only a photopolymerization initiator acting on the reactive group that is to be polymerized. That is, when selectively polymerizing a radically reactive group, it is preferable to employ only a radical photopolymerization initiator, and when selectively polymerizing a cationically reactive group, it is preferable to employ only a cation photopolymerization initiator. The quantity of photopolymerization initiator that is employed is preferably 0.01 to 20 weight %, more preferably 0.1 to 8 weight %, and still more preferably, 0.5 to 4 weight % of the solid component of the coating liquid.

Next, ultraviolet radiation is preferably used for the irradiation to induce polymerization. In this process, when the irradiation energy and/or illuminance is excessive, there is a risk that both the radically reactive group and the cationically reactive group will end up reacting non-selectively. Accordingly, the irradiation energy is preferably 5 to 1000 mJ/cm², more preferably 10 to 800 mJ/cm², and still more preferably, 20 to 600 mJ/cm². The illuminance is preferably 5 to 1500 mW/cm², more preferably 10 to 1000 mW/cm², and more preferably, 20 to 800 mW/cm². The illumination wavelength preferably has a peak at 250 to 450 nm, and more preferably has a peak at 300 to 410 nm.

Among photopolymerization reactions, reactions employing radical photopolymerization initiators are impeded by oxygen and reactions employing cation photopolymerization initiators are not. Accordingly, when employing a liquid-crystal compound having a radically reactive group and a cationically reactive group and selectively polymerizing one of the reactive groups, it is preferable to conduct the irradiation in an atmosphere of an inert gas such as nitrogen when selectively polymerizing the radically reactive group, and preferable to conduct the irradiation in an atmosphere containing oxygen (such as air) when selectively polymerizing the cationically reactive group. However, reactions using cation photopolymerization initiators are impeded by moisture. The humidity of the atmosphere of the polymerization reaction is thus preferably low. Specifically, 60 % or lower is preferred, and 40 % or lower is more preferred. In addition, reactions using cation photopolymerization initiators tend to have higher reactivity at higher temperatures. Therefore, the reaction temperature is preferably high as possible in the range in which the liquid-crystal compound shows liquid crystallinity.

Further, when a liquid-crystal compound having a radically reactive group and a cationically reactive group are employed and one of the reactive groups is selectively polymerized, a polymerization inhibitor on the other reactive group can be preferably employed as a means of selective polymerization of the former. For example, when a liquid-crystal compound having a radically reactive group and a cationically reactive group is emplyed and the cationically reactive group is selectively polymerized, a small quantity of radical polymerization inhibitor can be added to enhance the selectivity. The quantity of such a polymerization inhibitor that is added is preferably 0.001 to 10 weight %, more preferably 0.005 to 5 weight %, and still more preferably, 0.02 to 1 weight % of the solid component of the coating liquid. Examples of radical polymerization inhibitors are nitrobenzene, phenothiazine, and hydroquinone. The hindered phenols that are commonly employed as oxidation inhibitors are also effective as radical polymerization inhibitors.

### [Horizontal orientation agents]

Incorporating at least one from among the compounds represented by general formulas (1) to (3) and fluorine-containing homopolymers and copolymers employing the monomer of general formula (4) described in paragraphs [0098] to [0105] in Japanese Unexamined Patent Publication (KOKAI) No. 2009-69793 into the composition for forming the above optically anisotropic layer essentially horizontally orients the molecules of the liquid-crystal compound. When liquid-crystal compounds are made horizontally oriented, an angle of incline relative to the horizontal surface is preferably 0 to 5 degrees, more preferably 0 to 3 degrees, still more preferably 0 to 2 degrees, and optimally, to an angle of incline of 0 to 1 degree.
The quantity of the horizontal orientation agent is preferably 0.01 to 20 weight %, more preferably 0.01 to 10 weight %, and still more preferably, 0.02 to 1 weight % of the weight of the liquid-crystal compound. The compounds represented by general formulas (1) to (4) described in paragraphs [0098] to [0105] in Japanese Unexamined Patent Publication (KOKAI) No. 2009-69793 can be employed singly or in combinations of two or more.

### [Optically anisotropic layer prepared by stretching]

The optically anisotropic layer can be a layer prepared by stretching a polymer. The optically anisotropic layer preferably has at least one unreacted reactive group. The polymer may be prepared by stretching polymer that has a reactive group beforehand, or a reactive group can be introduced to the optically anisotropic layer after stretching by using a coupling agent or the like. The characteristics of the optically anisotropic layer obtained by stretching include low cost and self-support properties (any support is not necessary for preparing or maintaining the optically anisotropic layer).

### [Two or more optically anisotropic layers]

As described above, birefringence pattern builders can contain two or more optically anisotropic layers. The two or more optically anisotropic layers can be adjacent in the normal direction, or a functional layer can be sandwiched between them. The retardation of the two or more optically anisotropic layers can be approximately equivalent, or can be different. The slow axes can be approximately identically oriented, or can be oriented in different directions. By using two or more optically anisotropic layers the slow axes of which are oriented in approximately identical directions, a pattern with a high degree of retardation can be prepared.

A birefringence pattern builder having two or more optically anisotropic layers can be prepared, for example, by the methods of repeatedly forming a new optically anisotropic layer on a birefringence pattern builder, and by employing a separate birefringence pattern builder as a transfer material to transfer a new optically anisotropic layer onto a birefringence pattern builder. Of these methods, the method of employing a separate birefringence pattern builder as a transfer material to transfer an optically anisotropic layer onto a birefringence pattern builder is preferred.

### [After-treatment of the optically anisotropic layer]

Various after-treatments can be used to modify the optically anisotropic layer that has been prepared. Examples of after-treatments include corona treatment to enhance adhesion, the addition of plasticizers to enhance flexibility, the addition of thermal polymerization inhibitors to enhance storage properties, and coupling processing to enhance reactivity. When the polymer in the optically anisotropic layer has an unreacted reactive group, the addition of a polymerization initiator corresponding to the reactive group is an effective means of modification. For example, by the addition of a radical photopolymerization initiator to an optically anisotropic layer in which the orientation of a liquid-crystal compound containing cationically reactive groups and radically reactive groups has been fixed with a cation photopolymerization initiator, the reaction of the unreacted radically reactive group can be promoted when patterned light exposure is subsequently conducted. Examples of means of adding plasticizers and photopolymerization initiators include immersing the optically anisotropic layer in a solution of the corresponding additive, and applying a solution of the corresponding additive on the optically anisotropic layer to permeate it. A method using an additive layer can also be employed, in which, when applying another layer on the optically anisotropic layer, the additive is first added to a coating liquid of the other layer, and then the additive is caused to permeate the optically anisotropic layer. In this process, it is possible to adjust the relation between the level of exposure of individual regions during patterned light exposure of the birefringence pattern builder, described further below, and the final retardation of the various regions that is achieved, and approximate desired material properties based on the additive that is used in the permeation, particularly the type and quantity of photopolymerization initiator.

### [Additive layer]

The additive layer that is formed on the optically anisotropic layer can also functions as a photosensitive resin layer such as a photoresist, a scattering layer that controls the scattering of the transmitted light, a hardcoat layer that prevents scratching of the lower layer, an antistatic layer that prevents the adhesion of debris due to charge buildup, or a print coating layer as a base for printing. At least one polymer and at least one photopolymerization initiator are preferably contained in a photosensitive resin layer. The additive layer preferably contains at least one polymerization initiator that functions to initiate a polymerization reaction by the unreacted reactive group in the optically anisotropic layer. In this case, it is preferable that the optically anisotropic layer and the additive layer containing a polymerization initiator are adjacent to each other. With such a structure, a birefringence pattern builder with which a birefringence pattern can be formed by a patterned radiation of heat or light without addition of an extra photopolymerization initiator can be made. The components of the additive layer containing a photopolymerization initiator is not particularly limited but is preferred to contain at least one polymer other than the photopolymerization initiator.

The polymer (which may be referred simply to as "binder", hereinafter) is not particularly limited and the examples include poly methyl (meth) acrylate, a copolymer of (meth)acrylic acid and its various esters, polystyrene, copolymer of styrene and (meth)acrylic acid or various kinds of (meth) acrylic esters, polyvinyl toluene, copolymer of vinyltoluene and (meth) acrylic acid or various kinds of (meth) acrylic esters, styrene / vinyltoluene copolymer, polyvinyl chloride, a polyvinylidene chloride, polyvinyl acetate, vinyl acetate / ethylene copolymer, vinyl acetate / vinyl chloride copolymer, polyester, polyimide, carboxymethyl cellulose, polyethylene, polypropylene, polycarbonate, and the like. Particularly preferable examples include a copolymer of methyl (meth) acrylate and (meth)acrylic acid, a copolymer of allyl (meth) acrylate and (meth)acrylic acid, and multi-system copolymer of benzyl (meth)acrylate and (meth)acrylic acid and other monomer. These polymers may be used independently or in combinations of plural types. The content of the polymer generally falls in the range from 20 to 99% by weight, preferably from 40 to 99% by weight, and more preferably from 60 to 98% by weight with respect to the total weight of the solid components contained in the polymer composition.
The photopolymerization initiator may be a thermal polymerization initiator or a photopolymerization initiator, either of which can be used depending on the purpose. The photopolymerization initiator may be a radical photopolymerization initiator, or a cation photopolymerization initiator.

The radical photopolymerization initiator used for the photosensitive polymer layer can be exemplified by vicinal polyketaldonyl compounds disclosed in United States Patent No. 2367660, acyloin ether compounds described in United States Patent No. 2448828, aromatic acyloin compounds substituted by α-hydrocarbon described in United States Patent No. 2722512, polynuclear quinone compounds described in United States Patent Nos. 3046127 and 2951758, combination of triaryl imidazole dimer and p-aminoketone described in United States Patent No. 3549367, benzothiazole compounds and trihalomethyl-s-triazine compounds described in Examined Japanese Patent Publication "Tokkosho" No. 51-48516, trihalomethyl-triazine compounds described in United States Patent No. 4239850, and trihalomethyl oxadiazole compounds described in United States Patent No. 4212976. Trihalomethyl-s-triazine, trihalomethyl oxadiazole and triaryl imidazole dimer are particularly preferable. Besides these, "polymerization initiator C" described in Japanese Laid-Open Patent Publication "Tokkaihei" No. 11-133600 can also be exemplified as a preferable example.

The cation photopolymerization initiator can be exemplified by organic sulfonium salts, iodonium salts, and phosphonium salts. An organic sulfonium salt is preferable and triphenyl sulfonium salt is more preferable. As a counter ion of these compounds, hexafluoro antimonate, hexafluoro phosphate, or the like is preferably used.

The amount of the photo-polymerization initiators to be used is preferably 0.01 to 20 % by weight, more preferably 0.2 to 10 % by weight on the basis of solids in the additive layer.

### [Additive layer having light scattering property]

By applying light scattering property to the additive layer, it becomes possible to control glare of the product or covert property. As a scattering layer, a layer having convexo-concave on the surface with embossing treatment, or a mattiing layer containing a matting agent such as particles is preferred. As particles that improve the covert property, the particle size is preferably 0.01 to 50 micrometers, more preferably 0.05 to 30 micrometers. The concentration of the particle is preferably 0.01 to 5 % and more preferably 0.02 to 1 %.

### [Additive layer having hard coating property]

In order to apply hard coating property, it is preferred to use polymer with high Tg as a polymer in the additive layer. Tg is preferably 50 °C or more, more preferably 80 °C or more, and further preferably 100 °C or more. To increase Tg of the polymer, a polar group such as hydroxyl group, carboxylic acid group, or amino group can be introduced. Examples of polymers having high Tg include reaction products of an alkyl (meth) acrylate such as poly methyl (meth) acrylate or poly ethyl (meth) acrylate, a copolymer of an alky (meth) acrylate and (meth) acrylic acid, reaction products of a hydroxyl group containing (meth) acrylate such as 2-hydroxyl ethyl (meth) acrylate or 2-hydroxyl propyl (meth) acrylate, and copolymer of an alky (meth) acrylate and a half ester produced from a reaction of a hydroxyl group containing (meth) acrylate and acid anhydride such as succinic acid anhydride and phthalic acid anhydride.

In addition, in order to apply hard coating property, a layer formed by polymerizing a layer containing at least one polymerizable monomer and polymerizable polymer having two or more functional groups by irradiation of light or heat. Examples of the reactive group include vinyl group, allyl group, (meth) acrylic group, epoxy group, oxetanyl group, or vinyl ether group. Examples of polymerizable polymer include glycidyl (meth) acrylate, an allyl (meth) acrylate, an ethyleneglycol di-(meth) acrylate, a reaction product of a polymerizable group containing acrylate such as glycerol 1, 3-di(meth) acrylate, copolymer of polymerizable group containing acrylate and reaction product (meth) acrylic acid, and its multi-system copolymer with other monomers.

### [Additive layer as print coating layer]

It is preferable that print ink can be applied on the additive layer to form a pattern that can be recognized by visible light, ultraviolet light, or infrared light. It is also preferable to introduce a polar group such as carboxylic acid group or hydroxy group to the side chain of the polymer in the aim of the improvement of the wettability of the ink.
As measures to improve the wettability, surface-modifying treatment can be conducted at the same time. Examples of the surface-modifying treatment include UV treatment such as those using a low pressure mercury lamp or excimer lamp, and discharge treatment such as corona discharge or glow discharge. Among UV treatments, the treatment using excimer, which has higher energy and high modification efficiency, is preferred.

As ink for the printing, UV fluorescent ink and IR ink are themselves forms of security printing, and are thus preferable to enhance security. The method for printing is not specifically limited. Generally known flexo printing, gravure printing, offset printing, screen printing, ink-jet printing, xerography, and the like can be employed. Microprinting at a resolution of 1,200 dpi or higher is preferable to increase security.

### [The support]

The birefringence pattern builder may have a support to ensure dynamic stability. The support in the birefringence pattern builder as is may become a temporary support in the birefringence pattern transfer foil, or a temporary support in the birefringence pattern transfer foil may be provided separately from the support in the birefringence pattern builder (during or after the formation of the birefringence pattern, in place of or in addition to the support in the birefringence pattern builder.) The support is not particularly limited and may be rigid or flexible, and a flexible support is preferred. As a rigid support, examples include, although not particularly limited to, known glasses such as soda glass sheet having a silicon oxide film formed on the surface thereof, low-expansion glass, non-alkali glass, quartz glass sheets, and sheets of other known glasses, metal plates such as aluminum plate, iron plate, and SUS plate, resin plates, ceramic plates, and stone slabs. Examples of flexible supports include plastic films such as cellulose esters (such as cellulose acetate, cellulose propionate, and cellulose butyrate), polyolefins (such as norbornene polymers), poly(meth)acrylic acid esters (such as polymethyl methacrylate), polycarbonates, polyesters, polysulfones, and norbornene polymers, paper, aluminum foil, and cloth. Due to ease of handling, the thickness of the rigid support is preferably 100 to 3000 micrometers, and more preferably, 300 to 1500 micrometers, the thickness of the flexible support is preferably 3 to 500 micrometers, and more preferably, 10 to 200 micrometers. The support preferably has heat resistance adequate to prevent deformation and coloration during baking, described further below. Instead of the reflective layer described further below, the support itself may have a reflective function.

### [The orientation layer]

As set forth above, an orientation layer can be employed in the formation of the optically anisotropic layer. The orientation layer is generally provided on the support or temporary support, or on an undercoating layer that is applied on the support or temporary support. The orientation layer functions to determine the orientation of the liquid-crystal compound provided on it. The orientation layer can be any layer that imparts an orientation to the optically anisotropic layer. Preferred examples of the orientation layer include rubbed layers of organic compounds (preferably polymers); optical orientation layers that exhibit a liquid-crystal orienting property by irradiation with polarized light, such as azobenzene polymers and polyvinyl cinnamate; oblique vapor-deposition layers of inorganic compounds; microgrooved layers; cumulative films of omega-tricosanoic acid, dioctadecyl methyl ammonium chloride, methyl stearate or the like formed by the Langmuir-Blodgett method (LB method); and films in which a dielectric is oriented by imparting an electric or magnetic field. In the rubbed form of orientation films, polyvinyl alcohol is preferably contained, and the ability to crosslink with at least one layer either above or below the orientation layer is particularly preferred. An optical orientation layer and microgrooves are preferred as methods of controlling the direction of orientation. Compounds that exhibit orientation based on dimers, such as polyvinyl cinnamate, are particularly preferred as optical orientation layers. Embossing with a master roll manufactured in advance by mechanical or laser processing is particularly preferable for microgrooves.

### [Reflective layer]

Birefringence pattern builder may have a reflective layer for an effective light exposure in the production process or for an easy evaluation of the optical property during the production. The reflective layer is not specifically limited, but preferably does not have a depolarization property. Examples include metal layers such as aluminum and silver, a reflective layer of multilayered films of dielectrics, and printed layers with gloss. A semi-transmissive-half-reflective layer of transmittance of 8 to 92 %, and reflection ratio of 8 to 92 % may also be used. A semi-transmissive-half-reflective layer can be preferably manufactured by the method of reducing the thickness of the metal layer, which is inexpensive. A semi-transmissive-half-reflective layer of metal absorbs light. Thus, a dielectric multilayer film that permits control of transmission and reflection without absorption is preferred from the perspective of light-use efficiency.

### [Pre-formation of the layers needed in the birefringence pattern transfer foil]

The layers constituting the birefringence pattern transfer foil such as a detachment layer, a releasing layer, adhesive layer, which are explained below, may be formed before the formation of the birefringence pattern, or before the formation of the optically anisotropic layer. Particularly, when the support in the birefringence pattern builder becomes a temporary support of the birefringence pattern transfer foil as it is, a releasing layer and a detachment layer, which should be at the side of the temporary layer rather than the side of the optically anisotropic layer, are preferably formed before the formation of the optically anisotropic layer. The details of these layers will be explained later.

### [The coating method]

Various layers such as the optically anisotropic layer and the orientation layer can be formed by application of a coating solution by the dip coating method, air knife coating method, spin coating method, slit coating method, curtain coating method, roller coating method, wire bar coating method, gravure coating method, and extrusion coating method (U.S. Patent 2,681,294). Two or more layers can be simultaneously applied. Simultaneous application methods are described in U.S. Patents 2,761,791, 2,941,898, 3,508,947, and 3,526,528, and in Yuji Harazaki, Coating Technology, p. 253, Asakura Shoten (1973).

### [Preparation of patterned optically anisotropic layer and preparation of a birefringence pattern transfer foil]

A birefringence pattern builder is subjected to prescribed steps to obtain a patterned optically anisotropic layer and a birefringence pattern transfer foil can be prepared by further forming additional layers if necessary. Examples of the steps conducted in the preparation of a patterned optically anisotropic layer are, although not particularly limited thereto, patterned light exposure, heating, and thermal writing. Preferably, a patterned optically anisotropic layer can be effectively prepared by conducting patterned light exposure and heating in this order.

### [Patterned light exposure]

In the present description, the term "patterned light exposure" means exposure conducted in a manner that some of the regions of a birefringence pattern builder are exposed to light or exposure conducted under different exposure conditions in two or more regions. In exposures conducted under different exposure conditions to each other, no exposure (unexposed regions) may be included. The patterned light exposure technique employed can be contact exposure with a mask, proximity exposure, projection exposure, or the like. Scanning exposure in which a laser, electron beam, or the like is focused on a determined position, without employing a mask, to directly draw an image can also be employed. When the form of the birefringence pattern builder is sheet-like, batch-type light exposure can be employed and when the form of the birefringence pattern builder is roll-like, Roll to Roll light exposure can be employed. The illumination wavelength of the light source used in exposure preferably has a peak at 250 to 450 nm, and more preferably, has a peak at 300 to 410 nm. Specific examples include ultra-high-pressure mercury lamps, high-pressure mercury lamps, metal halide lamps, and blue lasers. The preferred exposure level is normally about 3 to 2,000 mJ/cm², more preferably about 5 to 1,000 mJ/cm², and optimally, about 10 to 500 mJ/cm². The resolution in patterned light exposure is preferably 1,200 dpi or higher to permit the formation of a microprint latent image. To increase the resolution, it is preferable and necessary for the patterned optically anisotropic layer to be solid during patterned light exposure, and for the thickness to be 10 micrometers or less. To achieve a thickness of 10 micrometers or less, the patterned optically anisotropic layer is preferably formed of a layer containing a polymerizable liquid-crystal compound the orientation of which has been fixed. More preferably, the polymerizable liquid-crystal compound contains two or more types of reactive groups with different crosslinking mechanisms. The center core employed in the Roll to Roll light exposure is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1N to 2000N, more preferably about 3N to 1500N and further preferably about 5N to 1000N.

### [The exposure conditions during patterned light exposure]

In the course of conducting the exposure of two or more regions of the birefringence pattern builder under mutually different exposure conditions, the "two or more regions" may or may not have overlapping portions. However, the regions preferably do not have overlapping portions. Patterned light exposure can be conducted in multiple exposure cycles; can be conducted for example in a single exposure cycle using a mask or the like having two or more regions exhibiting different transmission spectra based on the region; or the two can be combined. That is, during patterned light exposure, exposure can be conducted such that two or more regions that have been exposed under different exposure conditions are produced. The scanning exposure is preferable because, in the scanning exposure, the exposure conditions can be varied for each region by the techniques of varying the light source intensity by exposure region, changing the illumination spots of the exposure regions, changing the scan rate, and the like.

The exposure conditions are not specifically limited. Examples include the peak exposure wavelength, the exposure illuminance, the exposure time, the exposure level, the temperature during exposure, and the atmosphere during exposure. Of these, from the perspective of the ease of adjusting exposure conditions, the peak exposure wavelength, the exposure illuminance, the exposure time, and the exposure level are preferred, and the exposure illuminance, exposure time, and exposure level are more preferred. The regions that are exposed under mutually different exposure conditions during patterned light exposure are subsequently subjected to a baking step and exhibit mutually different birefringence that is controlled based on the exposure conditions. In particular, different retardation values are imparted to the regions. That is, by adjusting the exposure conditions for each region during patterned light exposure, a birefringence pattern of desired retardation that differs by region can be obtained after the baking step. The exposure conditions can be varied continuously or discontinuously between two or more exposure regions being exposed under different exposure conditions.

### [Mask exposure]

Exposure employing an exposure mask is useful as a means of producing exposure regions under different exposure conditions. For example, exposure can be conducted with an exposure mask so that only one region is exposed. Then exposure with a separate mask or total surface exposure can be conducted with the temperature, atmosphere, exposure illuminance, exposure time, and exposure wavelength changed. In this manner, exposure conditions of the region exposed first and the regions subsequently exposed can be readily changed. Masks having two or more regions exhibiting different transmission spectra to each other are particularly useful as masks for changing the exposure illuminance or exposure wavelength. In that case, different exposure illuminances and exposure wavelengths in multiple regions can be achieved in a single exposure cycle. Different exposure levels can also be imparted with an identical period of exposure under different exposure illuminances.

### [Scanning exposure]

Scanning exposure can be conducted by applying an image drawing device to form a desired two-dimensional pattern on a drawing surface with light, for example.
One representative example of such a drawing device is an image recording device that is configured to use a laser beam deflection scanning means to scan an object that is being scanned with a laser beam directed from a laser beam generating means to record a prescribed image or the like. This type of image recording device modulates the laser beam being directed from the laser beam generating means based on an image signal during the recording of the image or the like (Japanese Unexamined Patent Publication (KOKAI) Heisei No. 7-52453).

A device in which recording is conducted by scanning a laser beam in a secondary scan direction on an object being scanned that has been adhered on the outer circumference surface of a drum rotating in a primary scan direction, and a device in which recording is conducted by rotationally scanning a laser beam over an object being scanned that has been adhered to the cylindrical inner circumference surface of a drum can be employed (Japanese Patent No. 2,783,481).

A drawing device forming a two-dimensional pattern on a drawing surface with a drawing head can also be employed. For example, an exposure device forming a desired two-dimensional pattern on the exposure surface of a photosensitive material or the like with an exposure head, which is employed to fabricate semiconductor substrates and print plates, can be employed. A typical example of such an exposure head is equipped with a pixel array with multiple pixels that generates a group of light points constituting a desired two-dimensional pattern. By operating this exposure head while displacing it relative to an exposure surface, a desired two-dimensional pattern can be formed on the exposure surface.

As an exposure device such as those set forth above, for example, an optical device has been proposed that forms a desired image on an exposure surface by displacing a digital micromirror device (DMD) in a prescribed scan direction on an exposure surface, inputting frame data comprised of multiple drawing point data corresponding to the multiple micromirrors into the memory cells of the DMD based on the displacement in the scan direction, and sequentially forming a group of drawing points corresponding to the micromirrors of the DMD in a time series (Japanese Unexamined Patent Publication (KOKAI) No. 2006-327084).

In addition to the above DMD, a transmitting-type spatial light-modulating element can be employed as the spatial light-modulating element provided on an exposure head. The spatial light-modulating element can be of either the reflecting type or transmitting type. Additional examples of spatial light-modulating elements include the micro-electrical mechanical system (MEMS) type of spatial light-modulating element (special light modulator (SLM)), optical elements that modulate transmitted light by means of an electro-optical effect (PLZT elements), liquid-crystal light shutters (FLC), and other liquid-crystal shutter arrays. The term "MEMS" is a general term for microsystems integrating microscopic sensors, actuators, and control circuits by means of micromachining technology based on IC manufacturing processes. The term "MEMS-type spatial light-modulating element" means a spatial light-modulating element that is driven by electromechanical operation utilizing electrostatic forces.

A device in which multiple grating light valves (GLVs) are disposed in a two-dimensional configuration can also be employed.
In addition to the above laser beam source, lamps and the like can be employed as the light sources of the exposure head.

### [Patterned light exposure of two or more optically anisotropic layers]

A new transfer material for building birefringence patterns can also be transferred onto a laminate obtained by patterned light exposure on a birefringence pattern builder, and then patterned light exposure can be conducted again. In that case, the retardation values remaining following baking in a region that remains unexposed both the first and second times (which normally have the lowest retardation values), a region that is exposed the first time but is not exposed the second time, and a region that is exposed both the first and second times (which normally have the highest retardation values) can be effectively changed. Regions that are not exposed the first time but are exposed the second time can be thought of as being identical after the second exposure to regions that have been exposed both the first and second times. Similarly, by alternately conducting transfer and patterned light exposure three or four times, four or more regions can be readily prepared. This method is useful when it is desirable to impart differences (differences in optical axis direction, extremely large differences in retardation, and the like) to different regions that cannot be imparted by means of exposure conditions alone.

### [Heating (baking)]

A birefringence pattern can be prepared by heating a birefringence pattern builder that has been subjected to the patterned light exposure at 50°C or higher but not higher than 400°C, preferably at 80°C or higher but not higher than 400°C. As a heating unit, hot-air furnace, muffle furnace, IR heater, ceramic heater, electric furnace, or the like can be employed. When the form of the birefringence pattern builder is sheet-like, batch-type heating can be employed and when the form of the birefringence pattern builder is roll-like, roll-to-roll-type heating can be employed. The center core employed in the roll-to-roll-type heating is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1 N to 2000N, more preferably about 3N to 1500N and further preferably about 5N to 1000N.
The birefringence pattern can contain a region in which the retardation is essentially 0. For example, when an optically anisotropic layer is formed employing a liquid-crystal compound having two or more reactive groups, portions that remain unexposed following patterned light exposure lose their retardation during baking, resulting in a retardation of essentially 0.

Also, a new transfer material for building a birefringence pattern can be transferred onto a birefringence pattern builder that has been baked, after which patterned light exposure and baking can be conducted anew. In that case, combining the first and second exposure conditions, the retardation value remaining after the second baking can be effectively changed. This method is useful when it is desirable to form two regions with birefringence properties that mutually differ in the directions of the slow axes in shapes that do not overlap.

### [Thermal writing]

As set forth above, a retardation of essentially 0 can be achieved by baking unexposed regions. Thus, in addition to a latent image based on patterned light exposure, a latent image based on thermal writing can be included in a patterned birefringent product. Thermal writing can be conducted with a thermal head, or by drawing with an IR or YAG laser or the like. For example, information that must be kept secret (personal information, passwords, management codes of products that could compromise designs, and the like) can be conveniently rendered as latent images in combination with a small printer having a thermal head. Thermal writing IR and YAG lasers that are usually used for corrugated fiberboard containers can be used without any modification.

### [The functional layers of the birefringence pattern transfer foil]

Examples of the functional layers constituting the birefringence pattern transfer foil are - in addition to the patterned optically anisotropic layer - a temporary support, an adhesive layer, and as needed, a detachment layer, a releasing layer, a printed layer, and a reflective layer. These functional layers can be incorporated into the birefringence pattern builder in advance, or can be formed after fabricating the patterned optically anisotropic layer. When the support of the birefringence pattern builder also serves as the temporary support of the birefringence pattern transfer foil, it is preferable for the releasing layer and detachment layer to be formed before forming the optically anisotropic layer.

The functional layers can be formed by the dip coating, air knife coating, spin coating, slit coating, curtain coating, roller coating, wire bar coating, gravure coating, and extrusion coating methods (US Patent 2,681,294). In that case, two or more layers can be simultaneously applied. Simultaneous coating methods are described in US Patent Nos. 2,761,791, 2,941,898, 3,508,947, 3,526,528, and by Harasaki, Y., Coating Engineering, p. 253, Asakura Shoten (1973). Methods of formation other than the above can be employed based on the properties of the functional layers.

### [The temporary support]

The temporary support constituting the birefringence pattern transfer foil is not specifically limited. It can be rigid or flexible, but flexible is preferred. Rigid supports are not specifically limited. Examples include known glasses such as soda glass sheet having a silicon oxide film formed on the surface thereof, low-expansion glass, non-alkali glass, quartz glass sheets, and sheets of other known glasses, metal plates such as aluminum plate, iron plate, and SUS plate, resin plates, ceramic plates, and stone slabs. Flexible supports are not specifically limited. Examples include cellulose esters (such as cellulose acetate, cellulose propionate, and cellulose butyrate), polyolefins (such as norbornene polymers), poly(meth)acrylic acid esters (such as polymethyl methacrylate), polycarbonate, polyester, polysulfone, norbornene polymers, other plastic films, paper, aluminum foil, and cloth. Due to ease of handling, the film thickness of a rigid support is desirably 100 to 3,000 micrometers, preferably 300 to 1,500 micrometers. The film thickness of a flexible support is desirably 3 to 500 micrometers, preferably 10 to 200 micrometers.

### [The adhesive layer]

The adhesive layer constituting the birefringence pattern transfer foil is not specifically limited as far as it exhibit adequate adhesion to the member to which the transfer is being made. Examples include pressure-sensitive resin layers, photosensitive resin layers and heat-sensitive resin layers. Heat-sensitive resin layers are preferred. In cases when employing a semitransparent birefringence pattern transfer foil employing a semitransparent reflective layer or a transparent birefringence pattern transfer foil without a reflective layer, optical characteristics such as transmittance, haze, and retardation are preferably kept within suitable ranges.

Pressure-sensitive resin layers are not specifically limited as far as they exhibit adhesion when pressure is applied. Examples include adhesives such as rubbers, acrylics, vinyl ethers, silicones, polyesters, polyurethanes, polyethers, and synthetic rubbers. With regard to the form of the adhesive in the manufacturing stage and coating stage, solvent adhesives, nonaqueous emulsion adhesives, aqueous emulsion adhesives, water-soluble adhesives, hot melt adhesives, liquid curable adhesives, delayed tack adhesives, and the like can be employed. Rubber adhesives are described in New Polymer Library 13, Adhesion Techniques, Polymer Kankoukai, p. 41 (1987). Examples of vinyl ether adhesives include vinyl ether consisting chiefly of 2 to 4 carbon atom alkyl vinyl ether polymers, vinyl chloride/vinyl acetate copolymers, vinyl acetate polymers, and polyvinyl butyrals and the like mixed with plasticizers. Silicone adhesives in which rubber siloxanes are employed to impart the form of a film with condensing power; and those in which resin siloxanes are employed to impart tackiness and adhesion can be used. The adhesive characteristic of the pressure-sensitive resin layer can be suitably controlled by conventionally known methods, such as by adjusting the degree of crosslinking and the molecular weight thereof by means of the composition and molecular weight of the materials forming the pressure-sensitive resin layer, the type of crosslinking, the ratio of crosslinking functional groups contained, and the blending ratio of crosslinking agents.

The photosensitive resin layer is comprised of a photosensitive resin composition. Commercially available materials can be employed. When employed as an adhesive layer, a photosensitive resin layer is preferably formed of a resin composition containing at least a polymer, a monomer or oligomer, and a photopolymerization initiator or photopolymerization initiator system. Reference can be made to the description given in paragraphs [0082] to [0085] in Japanese Unexamined Patent Publication (KOKAI) No. 2007-121986 for polymer, monomer or oligomer, and photopolymerization initiator or photopolymerization initiator system.

From the perspective of effectively preventing unevenness, a suitable surfactant is preferably incorporated into the photosensitive resin layer. Reference can be made to the description given in paragraphs [0095] to [0105] in Japanese Unexamined Patent Publication (KOKAI) No. 2007-121986 for surfactants.

The heat-sensitive resin layer is not specifically limited as far as it develops adhesion by heating. Either a thermoplastic resin or a thermosetting resin can be employed. In the case of a thermoplastic resin, adhesiveness can be developed by heating the resin to melt or soften it, followed by cooling. In the case of a thermosetting resin, adhesiveness can be developed by heating a resin that is initially fluid to cause it to react and cure. The two can be employed for different applications based on the different advantages they afford.

Thermoplastic resins can be used as heat-sensitive layers in various forms. However, for the sake of convenience, they will be divided for description into organic solvent-based thermoplastic resins that are employed by dissolution or dispersion in an organic solvent, and water-based thermoplastic resins that are employed by dissolution or dispersion in an aqueous solvent.

Organic solvent-based thermoplastic resins are not specifically limited as far as they exhibit adhesiveness to the target of the transfer when they are heated or the like. Examples include solvent-based ethylene-vinyl acetate copolymer resins, polyamide resins, polyester resins, polyethylene resins, ethylene-isobutyl acrylate copolymer resins, butyral resins, polyvinyl acetate resins, vinyl chloride vinyl acetate copolymer resins, cellulose derivatives, acrylic resins such as polymethyl methacrylate resins, polystyrene resins, styrene-acrylic resins, polyvinyl ether resins, polyurethane resins, polycarbonate resins, polypropylene resins, epoxy resins, phenol resins, styrene butadiene styrene block copolymers (SBS), styrene isoprene styrene block copolymers (SIS), styrene ethylene butylene styrene block copolymers (SEBS), styrene ethylene propylene styrene block copolymers (SEPS), other thermosetting elastomers, and reactive hot melt resins. More specific examples include AD1790-15 made by Toyo Morton; M-720AH made by DIC; A-928 made by Dainippon Ink; A-450 made by Dainippon Ink; A-100Z-4 made by Dainippon Ink; Alonmelt PES360 and Alonmelt PES375 made by Toagosei; and Vylon 550, Vylon BX1001, and Vylon UR8700 made by Toyobo,

Aqueous dispersion thermoplastic resins are not specifically limited as far as they exhibit adhesiveness to the transfer member when they are heated. Examples include vinyl acetate copolymer polyolefins, aqueous dispersion ethylene-vinyl acetate copolymer resins, ethylene methyl methylacrylate (EMMA) copolymer resins, polyester urethane resins, and aqueous-dispersion polyester resins. More specific examples include V-1 00 and V-200 made by Mitsui Chemicals; EC-1700, MC-3800, MC-4400, HA-1100, and AC-3100 made by Chuo Rika Kogyo; AP-60LM made by Dainippon Ink; and Vylonal MD-1985, Vylonal MD-1930, and Vylonal MD-1335 made by Toyobo.

In the course of forming a heat-sensitive resin layer, a resin such as one of those set forth above is dissolved or dispersed in a solvent to obtain a heat-sensitive resin layer coating liquid. This coating liquid can be directly coated and dried on the target layer (patterned optically anisotropic layer or additive layer formed on a patterned optically anisotropic layer, or the like) to form a heat-sensitive resin layer, or the heat-sensitive resin layer coating liquid can be temporarily coated on a support to form a heat-sensitive resin layer and transferred to the target layer, after which the temporary support is detached to achieve lamination.

Water, alcohol, amides (such as N,N-dimethyl formamide), sulfoxides (such as dimethyl sulfoxide), heterocyclic compounds (such as pyridine), hydrocarbons (such as benzene and hexane), alkyl halides (such as chloroform and dichloromethane), esters (such as methyl acetate and butyl acetate), ketones (such as acetone, methyl ethyl ketone, methyl isobutyl ketone, and cyclohexanone), and ethers (such as tetrahydrofuran and 1,2-dimethoxyethane) can be employed as the solvent of the heat-sensitive resin layer coating liquid. Two or more solvents can also be mixed for use. Preferred solvents for solvent-based thermoplastic resins are toluene, methyl ethyl ketone, ethyl acetate, butyl acetate, and mixed solvents thereof. Preferred solvents for aqueous dispersion thermoplastic resins are water, methanol, ethanol, propanol, and mixed solvents thereof. The heat-sensitive resin layer coating liquid can be applied to form a coating that is 1 to 20 micrometer-thick upon drying with a bar coater, comma coater, die coater, gravure coater, or the like.

In the course of forming a heat-sensitive resin layer, it is also possible to melt the thermoplastic resin itself without employing a solvent and apply it to the target layer. In that case, a special coater equipped with a hot melting device (called a hot melt coater or hot roll coater) becomes necessary. However, coating without a solvent affords the advantages of reducing the burden on the environment and permitting the use of thermoplastic resins of low solubility. Examples of thermoplastic resins of low solubility are crystalline polyester resins. Not only polyesters, but crystalline thermoplastic resins have the characteristics of melting quickly at temperatures exceeding their melting temperatures, storing well at below their melting temperatures, and in the course of being transferred by hot pressing to a target member, readily melting at and above their melting temperatures to afford good transferability.

Instead of the above thermoplastic resin, it is also possible to employ a low-molecular-weight hot melting compound. Examples of hot melting compounds are low molecular weight products of the above thermoplastic resins; and various waxes in the form of vegetable waxes such as carnauba wax, wood wax, candelilla wax, rice wax, and urucury wax; animal waxes such as beeswax, insect wax, shellac, and whale wax; petroleum waxes such as paraffin wax, microcrystalline wax, polyethylene wax, Fischer-Tropsch wax, ester wax, and oxide waxes; and mineral waxes such as montan wax, ozokerite, and ceresin wax. Further examples include rosins, hydrogenated rosins, polymerized rosins, and rosin-modified glycerol.

These hot-melting compounds normally have a molecular weight of 10,000 or less, particularly 5,000 or less, and preferably have a melting point or softening point ranging from 50 to 150°C. These hot-melting compounds can be employed singly or in combinations of two or more. They can also be employed as additives in the above thermoplastic resin.

### [Optical characteristics of the adhesive layer]

It is desirable to keep Re of the adhesive layer low. In the artcle to which the birefringence pattern transfer foil of the present invention is transferred, the birefringence pattern is observed through the adhesive layer. Thus, when the adhesive layer has Re, the Re is imparted to the entire birefringence pattern, sometimes compromising the visibility of the birefringence pattern. Specifically, the Re of the adhesive layer is preferably 40 nm or less, more preferably 30 nm or less, and even more preferably 20 nm or less. After obtaining the adhesive layer by heating (or cooling), pressing, irradiating with light, and other steps to induce adhesiveness, that is, normally, even after the birefringence pattern transfer foil of the present invention has been transferred to the article, it is desirable to maintain the above Re. Further, after the above steps, that is, normally, after transferring the birefringence pattern transfer foil of the present invention to the article, the above Re is desirable.

### [The blocking prevention means of the adhesive layer]

The birefringence pattern transfer foil of the present invention preferably has a blocking prevention means. Here, the term "blocking" refers to the phenomenon of the outer surface adhering to the surface with which it is in contact when storage is conducted with the outer surface of the transfer foil in contact with another surface. Since the birefringence pattern transfer foil has an adhesive layer on the outer surface thereof, the danger of blocking is great. The adhesive layer is a layer that adheres to a desired transfer member under desired conditions. Depending on the material, it can end up gradually adhering under relatively stable conditions. The risk of blocking occurring with the back surface is particularly great when the product is cut into sheets that are stacked and stored, or when the product is wound into rolls and stored, at which time countermeasures are sometimes required. The blocking prevention means is not specifically limited. Examples include the addition of microparticles to the adhesive layer and the application of a cover film to the adhesive layer surface.

The microparticles (also referred to as "filler" in the embodiments and the like below) that are added to the adhesive layer as a blocking prevention means are not specifically limited. Examples include inorganic microparticles and resin microparticles. The inorganic microparticles are not specifically limited. Silica microparticles, alumina microparticles, ZnO microparticles, and the like are desirable, and silica microparticles are preferred. The resin microparticles are not particularly limited. Polyethylene microparticles are desirable. The particle diameter of the microparticles is desirably 0.02 micrometers to 10 micrometers, preferably 0.03 micrometers to 8 micrometers, and more preferably 0.04 micrometers to 6 micrometers. When the particle diameter is excessively small, resistance to blocking deteriorates. When excessively large, there are problems in that adhesive performance decreases and the like. The weight ratio to the total adhesive layer is desirably 1 to 20%, preferably 2 to 10%. When the ratio of microparticles added is excessively low, the resistance to blocking sometimes deteriorates. When it is too high, adhesive performance sometimes decreases. The addition of such microparticles is also effective for enhancing the cutting properties of the foil in addition to preventing blocking.

When the particle diameter of the microparticles that are added is excessively large and the addition ratio is excessive, the adhesive layer will sometimes develop considerable haze. Haze in the adhesive layer normally does not cause problems, but it will sometimes compromise visibility when excessively pronounced. In particular, in cases where observing a pattern on a transfer member under an adhesive layer through a birefringence pattern following transfer, the haze of the transfer foil as a whole following transfer is desirably 50% or less, preferably 20% or less.

The cover film that is applied to the adhesive layer as a blocking prevention means is not specifically limited so long as it can be readily detached from the surface of the adhesive layer. Examples include polyolefin films, polytetrafluoroethylene films, and silicon paper. When the cover film is excessively thin, there is a possibility of it severing during detachment, which can sometimes render handling difficult. When the cover film is excessively thick, the volume during storage becomes excessive, which may sometimes be inefficient. Accordingly, the thickness of the cover film is desirably 1 to 50 micrometers, preferably 2 to 40 micrometers, and more preferably, 5 to 25 micrometers. The surface of the cover film can be smooth, or can have irregularities.

### [The detachment layer]

To enhance detachability during transfer, a detachment layer can be provided. The use of a detachment layer stabilizes detachment between the detachment layer and temporary support and enhances transferability during transfer. The detachment layer becomes the outermost layer following transfer, and thus desirably has a surface-protecting quality.

The detachment layer is not specifically limited as far as it can detach from the temporary support and adhere to the adjacent layer (orientation layer, patterned optically anisotropic layer, or the like) that is formed on the opposite side of the detachment layer relative to the temporary support. Examples include acrylic resins, vinyl chloride-vinyl acetate copolymer resins, polyester resins, polyester methacrylate resins, polyvinyl chloride resins, cellulose resins, silicone resins, chloride rubber, casein, and metal oxides. Two or more of these can be mixed for use. Releasing agents such as fluorine resins, silicone, and various waxes; various surfactants; and the like can be added to or copolymerized with them.

Among the above, single acrylic resins with molecular weights of about 20,000 to 100,000, and resins containing an acrylic resin and a vinyl chloride-vinyl acetate copolymer resin with a molecular weight of 8,000 to 20,000, along with 1 to 5 weight% of a polyester resin having a molecular weight of about 1,000 to 5,000 as an additive, are preferably employed. The detachment layer can be formed by forming an ink with the above composition using an organic solvent and applying the ink to the temporary support by a method such as coating. The thickness thereof is desirably 0.1 to 3 micrometers when surface protection is taken into account. The detachment layer desirably has a detachment force of 1 to 5 g/inch (90° detachment) with the temporary support.

The detachment layer can be formed using an ionizing radiation curable resin. Ionizing radiation curable resins include electron beam curable resins and UV radiation curable resins. UV radiation curable resins are identical with electron beam curing resins in terms of their components with the exception that the former contain photopolymerization initiators and sensitizing agents. Ionizing radiation curable resins generally contain primary components as film forming components in the form of monomers, oligomers, or polymers having radically polymerizable active groups in their structures. Examples of the monomers are derivatives of (meth)acrylic acid esters, and examples of the oligomers and polymers are urethane acrylates and polyester acrylates. To convert them to UV radiation curable resins, it suffices to add a photopolymerization initiator in the form of an acetophenone, benzophenone, Michler benzoyl benzoate, α-aminoxime ester, tetramethylthiuram monosulfide, or thioxanthone, or a photosensitizing agent in the form of n-butylamine, triethylamine, or tri-n-butylphosphine to a monomer or the like having a radical polymerizable active group to obtain a composition. Curing can be carried out, for example, in the case of electron beam irradiation, using an electron beam accelerator of the Cockroft-Walton type to irradiate 0.1 to 100 Mrad, preferably 1 to 10 Mrad, of a 50 to 1,000 KeV, preferably 100 to 300 KeV electron beam. In the case of UV irradiation, curing can be carried out by irradiating 0.1 to 10,000 mJ/cm², preferably 10 to 1,000 mJ/cm², from a light source such as an ultrahigh pressure mercury lamp.

### [The releasing layer]

To enhance detachability during transfer, a releasing layer can be provided. The use of a releasing layer stabilizes detachment between the releasing layer and the adjacent layer (detachment layer, orientation layer, patterned optically anisotropic layer, or the like) that is formed on the opposite side of the releasing layer relative to the temporary support, and enhances transferability during transfer. As needed, both a releasing layer and a detachment layer can be provided. When both are provided, the transferability during transfer of the releasing layer (and temporary support) is further enhanced.

A releasing resin, a resin containing a releasing agent, a resin that is curable by crosslinking by means of ionizing radiation, and the like can be employed as a releasing layer. Examples of releasing resins are fluorine resins, silicone, melamine resins, epoxy resins, polyester resins, acrylic resins, and cellulose-based resins. Melamine resins are a preferred example. Examples of resins containing a releasing agent are acrylic resins, vinyl resins, polyester resins, and cellulose resins to which releasing agents such as fluorine resins, silicone, and various waxes have been added or copolymerized.

The releasing layer can be formed by dispersing or dissolving the resin in a solvent, and using a known coating method such as roll coating or gravure coating to coat and dry it. As needed, hot drying can be conducted at a temperature of 30 to 120°C; aging can be conducted; or crosslinking can be induced by irradiation with ionizing radiation. The thickness of the releasing layer is normally about 0.01 to 5.0 micrometers, preferably about 0.5 to 3.0 micrometers.

### [The printed layer]

The birefringence pattern transfer foil can include a printed layer to achieve visual effects as needed. Examples of printed layers are layers in which visible patterns, or patterns that are visible with UV or infrared radiation, have been formed. Since UV fluorescent ink and IR inks are themselves security printings, they are desirable to enhance security. The method of forming the printed layer is not specifically limited. Commonly known relief printing, flexo printing, gravure printing, offset printing, screen printing, inkjet printing, xerography, and the like can be employed. Various inks can be employed. From the perspective of durability, UV ink is preferably employed. Microprinting at a resolution of 1,200 dpi or higher is desirable to enhance security.

### [The reflective layer]

The birefringence pattern transfer foil can have a reflective layer to achieve visual effects as needed. In particular, when rendering the birefringence pattern visible by reflected observation and the article receiving the transfer is nonreflective, it is desirable to provid a reflective layer to enhance the visibility of the birefringence pattern. In cases where the birefringence pattern is rendered visible by transmitted observation and cases where the article receiving the transfer is reflective, it is useful to provide a semitransparent reflective layer in which the reflectance has been adjusted to adjust the visibility of transmitted light and reflected light. The reflective layer is not specifically limited. However, one without a depolarizing property is desirable. Examples include thin metal layers, layers containing metal particles, and thin dielectric layers.

The metal that is employed in the thin metal layer is not specifically limited. Examples include aluminum, chromium, nickel, silver, and gold. Thin metal films can be monolayer films or multilayer films. For example, they can be manufactured by vacuum film formation, physical vapor deposition, chemical vapor deposition, or the like. Examples of layers containing reflective metal particles are layers printed with inks of gold and silver, for example.

The thin dielectric layer can be a monolayer film or a multilayer film. A thin film prepared using a material with a large difference in refractive index with the adjacent layer is desirable. Examples of materials with high refractive indexes are titanium oxide, zirconium oxide, zinc sulfide, and indium oxide. Examples of materials with low refractive indexes are silicon dioxide, magnesium fluoride, calcium fluoride, and aluminum fluoride.
When the birefringence pattern transfer foil has a reflective layer, the reflective layer is desirably positioned between the patterned optically anisotropic layer and the adhesive layer. The adhesive layer desirably doubles as a reflective layer.

When the birefringence pattern transfer foil has a reflective layer somewhere between the patterned optically anisotropic layer and the adhesive layer or the adhesive layer is doubling as a reflective layer, the birefringence pattern transfer foil following transfer can be made to exhibit good visibility regardless of the optical characteristics of the transfer member by holding up a polarizing filter. That is, regardless of whether the transfer member is reflective or transparent, or even opaque and nonreflective, the birefringence pattern transfer foil following transfer can be made to exhibit good visibility through the effect of the reflective layer. In that case, the reflectance of the reflective layer is desirably 60% or greater on average in the visible light range without holding up a polarizing filter, preferably 70% or more, and more preferably 80% or more. Additionally, when it is desirable to utilize a design on the transfer member as is, the presence of a highly reflective layer of high reflectance is sometimes unsuitable.

### [Transparent birefringence pattern transfer foils]

Depending on the application, it may be desirable for the birefringence pattern transfer foil to be transparent following transfer. In the present description, the term "birefringence pattern transfer foil following transfer" sometimes means that the "temporary support" has been detached from the transfer foil of the present invention. When the birefringence pattern transfer foil following transfer is transparent, it becomes possible to observe the design of the transfer member through the birefringence pattern transfer foil following transfer. When the birefringence pattern transfer foil following transfer is of particularly high transparency, transfer onto the transfer member is possible without revealing the presence of the birefringence pattern. This is useful when it is undesirable to lose the design properties of the transfer member or when it is undesirable to alert counterfeiters to the presence of a birefringence pattern serving as a means of determining authenticity.

When the birefringence pattern transfer foil is transparent following transfer, the visibility of the birefringence pattern will be affected by the optical characteristics of the transfer member. When the transfer member is reflective, a polarizing filter can be held over the transfer member to which the birefringence pattern has been transferred to utilize reflection off the transfer member to achieve visibility. When the transfer member is transparent, visibility can be achieved by stacking polarizing filters above and below the transfer member to which the birefringence pattern has been transferred (the viewer side and the opposite side from the viewer side). When the transfer member is opaque and insufficiently reflective (and it is desirable to utilize the design of the transfer member), a birefringence pattern transfer foil that is transparent in the manner set forth above desirably further has a semitransparent reflective layer.

An example of a means of measuring the transmittance of the birefringence pattern transfer foil following transfer is to measure the transmittance following transfer to a transfer member of high transmittance, and compare it with the separately measured transmittance of the transfer member alone. The same applies to other optical characteristics such as haze. Glass is an example of a transfer member that can be used for measurement. The transmittance of the birefringence pattern transfer foil following transfer is desirably 20% or greater on average in the visible light region, preferably 30% or greater, and more preferably, 40% or greater. The haze of the birefringence pattern transfer foil following transfer is desirably 20% or less, preferably 15% or less, and more preferably 10% or less. When the birefringence pattern transfer foil has a semitransparent reflective layer, the average reflectance of visible light of the semitransparent reflective layer is desirably 20% to 70% on average in the visible light range, preferably 30 to 60%, and more preferably, 35 to 55%.

### [Transfer of the birefringence pattern with the birefringence pattern transfer foil]

A birefringence pattern can be transferred onto a desired article by conducting prescribed steps using the birefringence pattern transfer foil. The transfer method is not specifically limited. After pressure bonding the birefringence pattern transfer foil to the article by an adhesion method corresponding to the adhesive layer, as needed, the temporary support is detached to transfer the birefringence pattern to the article. When the temporary support is left in place, that is, when the temporary support is not detached, the temporary support desirably has optical characteristics that do not impede the visibility of the birefringence pattern. More specifically, Re of the temporary support when left in place is desirably 100 nm or less, preferably 50 nm or less, and more preferably, 25 nm or less. The transmittance of the temporary support when left in place is desirably 50% or more on average in the visible light region, preferably 60% or more, and more preferably, 70% or more.

The method of adhesion corresponding to the adhesive layer is simple pressure transfer for a pressure-sensitive resin layer and pressure transfer combined with exposure to light for a photosensitive resin layer. However, for a heat-sensitive resin layer, hot pressure transfer (hot stamping, hot lamination, or the like) with heating is desirable.
The heating temperature when employing hot pressure transfer, although varying with the type of transfer member, is desirably about 60 to 200°C, preferably falling within a range of 100 to 160°C. The pressure in the course of hot pressure transfer, although varying with the type of transfer member, desirably falls within a range of 0.5 to 15 MPa.
When transferring the birefringence pattern transfer foil of the present invention, means such as hot stamping and cold stamping can be employed to transfer only a portion of the birefringence pattern transfer foil, or a means such as hot lamination can be employed to transfer the entire transfer foil.

### [The article to which a birefringence pattern has been transferred]

The article that is employed as the transfer member of the birefringence pattern transfer foil of the present invention is not specifically limited. Examples include glass, metals, plastics, ceramics, wood, paper, and cloth. The plastics are not specifically limited. Examples include vinyl chloride resin, acrylic resin, polystyrene resin, polyester resins such as polyethylene terephthalate; polycarbonate resins; cellulose esters (such as cellulose acetate, cellulose propionate, and cellulose butyrate); and polyolefins (such as norbornene polymers). The article can be rigid or flexible and transparent or opaque. However, the presence of a metal reflective surface, either on the outer surface or interior thereof, is desirable for utilization.

The article is not specifically limited. Specific examples include plastic cards employed as prepaid cards, ID cards, and the like; various certificates; marketable securities; gift certificates; and the packages of commercial products such as luxury brand products, cosmetics, drugs, and tobacco. Articles having a metal reflective surface are preferably employed. Examples of such articles include the surface of digital cameras, the inside surface of wristwatches, the inside surfaces of pocket watches, the surfaces of the cases of personal computers, the inner and outer surfaces of mobile phones, the inner and outer surfaces of portable music players, the covers of cosmetics and beverages, the inner and outer surfaces of PTP packages employed for confections and pharmaceuticals, the outer surfaces of the metal cans of drug packages, the outer surfaces of precious metals, and the outer surfaces of jewelry. Transfer onto transparent packaging containing one of the articles having a metal reflective surface given by way of example above for use is also desirable.

[Applications of the article to which a birefringence pattern has been transferred]
The birefringence pattern of the article to which a birefringence pattern has been transferred is normally either nearly colorless or transparent, or permits only the identification of an image based on a print layer or the like. However, when such products are sandwiched between two polarizing plates, or, are viewed through a polarizing plate when the device has a reflective layer or a semi-transmissive-half-reflective layer, an additional characteristic contrast or colors are exhibited and can be readily visibly recognized. Utilizing this property, the article to which a birefringence pattern has been transferred, which is obtained by the above manufacturing method, can be employed as means of preventing forgery, for example. That is, using a polarizing plate, images with multiple colors that are normally nearly invisible to the naked eye can be made out in the article to which a birefringence pattern has been transferred. When a birefringence pattern is copied without the intervention of a polarizing plate, nothing is picked up. Conversely, when copied through a polarizing plate, a permanent pattern, that is, a pattern that is visible even without the polarizing plate, remains. Accordingly, it is difficult to duplicate a birefringence pattern. Such methods of producing birefringence patterns are not widespread and the materials are also quite unique. Thus, such articles are thought to be suited to use as means of preventing counterfeiting.
In particular, in an article to which a birefringence pattern has been transferred, which contains a semi-transmissive-half-reflective layer, birefringence pattern can be observed on text or photographs, and the like printed on the article before the transfer.

The article to which a birefringence pattern has been transferred does not only have security functions based on latent images. When coded with bar codes, QR codes, or the like, they can carry digital information. Digital encryption is also possible. As set forth above, by forming high-resolution latent images, a micro latent image that cannot be made out with the naked eye even through a polarizing plate can be printed, thereby further enhancing security. Additionally, security can be enhanced by combining such a device with the printing of invisible ink, such as UV fluorescent ink or IR ink.

The article to which a birefringence pattern has been transferred can be added with functions other than security functions. They can be combined with product information display functions such as price tags and 'Best used by' dates and water immersion functions achieved by the printing of ink that changes color when exposed to water.

### [Optical elements]

The article to which a birefringence pattern has been transferred, which is obtained by the above manufacturing method, can also be used on optical elements. For example, when a birefringence pattern obtained by the above manufacturing method is employed by transferring to an optical substrate such as glass, a special optical element that produces its effect only under prescribed polarization can be fabricated. As an example, a glass substrate transferred with a diffraction grating with a birefringence pattern can function as a polarization separating element that strongly diffracts specified polarized light, permitting application to projectors and the field of optical communications.

### Examples

The present invention will be described in greater detail below through Examples. The materials, reagents, substance quantities and ratios, operations, and the like that are indicated in the Examples below can be suitably modified without departing from the purpose or spirit of the present invention. Accordingly, the scope of the present invention is not limited to the specific examples given below.

### (Preparation of detachment layer coating liquid FL-1)

The following composition was prepared, filtered through a polypropylene filter with a pore diameter of 0.45 micrometers, and employed as detachment layer coating liquid FL-1.

| Detachment layer coating liquid composition (%) | |
|---|---|
| Polymethyl methacrylate (weight average molecular weight 50,000) | 16.00 |
| Methyl ethyl ketone | 74.00 |
| Cyclohexanone | 10.00 |

### (Preparation of orientation layer coating liquid AL-1)

The following composition was prepared, filtered through a polypropylene filter with a pore diameter of 30 micrometers, and employed as orientation layer coating liquid AL-1.

| Orientation layer coating liquid composition (%) | |
|---|---|
| Polyvinyl alcohol (PVA 205, made by Kuraray) | 3.23 |
| Polyvinyl pyrrolidone (Luvitec K30, made by BASF) | 1.50 |
| Distilled water | 57.11 |
| Methanol | 38.16 |

### (Preparation of optically anisotropic layer coating liquid LC-1)

The following composition was prepared, filtered through a polypropylene filter with a pore diameter of 0.45 micrometers, and employed as optically anisotropic coating liquid LC-1.
LC-1-1 was a liquid crystal compound having two reactive groups. One of the two reaction groups was a radical reactive group in the form of an acrylic group, and the other was a cation active group in the form of an oxetane group.

| Optically anisotropic layer coating liquid composition (%) | |
|---|---|
| Polyermizable liquid crystal compound (LC-1-1) | 32.88 |
| Horizontal orientation agent (LC-1-2) | 0.05 |
| Cation photopolymerization initiator (CPI100-P, made by San-Apro) | 0.66 |
| Polymerization controlling agent (Irganox 1076, made by Chiba Specialty Chemicals) | 0.07 |
| Methyl ethyl ketone | 46.34 |
| Cyclohexanone | 20.00 |

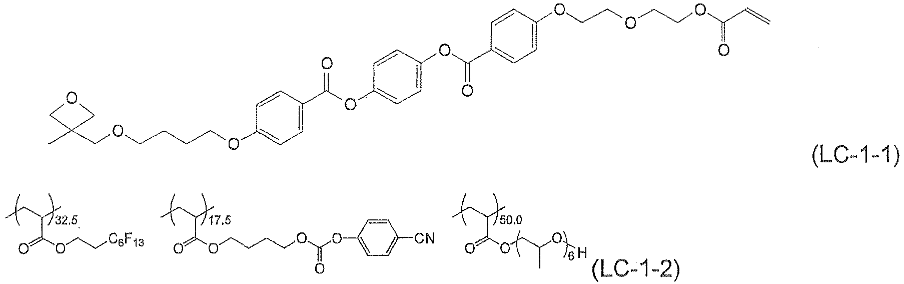

### (Preparation of additive layer coating liquid OC-1)

The composition indicated below was prepared, passed through a polypropylene filter with a pore size of 0.45 micrometers, and employed as transfer adhesive layer coating liquid OC-1. A radical photopolymerization initiator RPI-1 was employed in the form of 2-trichloromethyl-5-(p-styrylstyryl)-1,3,4-oxydiazole. B-1 denotes a copolymer of methyl methacrylate and methacrylic acid with a copolymerization component ratio (molar ratio) of 60/40.

| Additive layer coating liquid composition (weight%) | |
|---|---|
| Binder (B-1) | 7.63 |
| Radical photopolymerization initiator (RPI-1) | 0.49 |
| Surfactant solution (Megafac F-176PF, made by Dainippon Ink Chemical Industries) | 0.03 |
| Methyl ethyl ketone | 68.89 |
| Ethyl acetate | 15.34 |
| Butyl acetate | 7.63 |

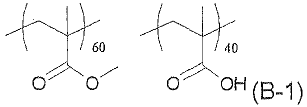

### (Preparation of filler-containing heat-sensitive adhesive layer coating liquid AD-1)

The following composition was prepared and employed as filler-containing heat-sensitive adhesive coating liquid AD-1.

| Heat-sensitive adhesive layer coating liquid composition (weight %) | |
|---|---|
| Polyester hot melt resin solution (PES375S40, made by Toagosei) | 33.75 |
| Silica microparticles (mean particle diameter 1.7 micrometers) | 1.50 |
| Methyl ethyl ketone | 64.75 |

### (Preparation of heat-sensitive adhesive layer use coating liquid AD-2)

The following composition was prepared, passed through a polypropylene filter with a pore diameter of 0.45 micrometers, and employed as adhesive layer coating liquid AD-2.

| Heat-sensitive adhesive layer coating liquid composition (weight %) | |
|---|---|
| Polyester hot melt resin solution (PES375S40, made by Toagosei) | 37.50 |
| Methyl ethyl ketone | 62.50 |

### (Example 1: Preparation of birefringence pattern transfer foil having filler as blocking prevention means)

### (Preparation of birefringence pattern builder P-1)

A 60 nm thickness of aluminum was vapor deposited on a polyethylene naphthalate film of 50 micrometers in thickness (Teonex Q83, Teijin DuPont) to prepare a support with reflective layer. A wire bar was then used to apply detachment layer coating liquid FL-1 on the surface on which the aluminum had been vapor deposited, and the coating was dried to obtain a detachment layer. The dry film thickness of the detachment layer was 2.0 micrometers. A wire bar was then used to apply orientation layer coating liquid AL-1 on the dried detachment layer, and the coating was dried to obtain an orientation layer. The dry film thickness of the orientation layer was 0.5 micrometers.

Next, after a rubbing treatment of the orientation layer, a wire bar was used to apply optically anisotropic layer coating liquid LC-1, the film surface was dried for 2 minutes at a temperature of 90°C to impart a liquid crystal phase, and a 160 W/cm air-cooled metal halide lamp (made by EYE GRAPHICS) was employed in air to radiate UV radiation, fix the orientation state of the liquid crystal phase, and form an optically anisotropic layer of 4.5 micrometers in thickness. In this process, the luminance of the UV radiation employed was 600 mW/cm² over the UV-A region (cumulative wavelengths 320 to 400 nm) and the irradiation energy was 300 mJ/cm² over the UV-A region. The retardation of the optically anisotropic layer was 400 nm. The polymer was a solid at 20°C. Finally, a wire bar was employed to apply additive layer coating liquid OC-1 on the optically anisotropic layer, the coating was dried, and an additive layer of 0.8 micrometers in thickness was formed to complete birefringence pattern builder P-1.

### (Preparation of birefringence pattern transfer foil F-1 containing filler in adhesive layer)

Birefringence pattern builder P-1 was pattern exposed R to R at exposure levels of 0 mJ/cm², 14 mJ/cm², and 40 mJ/cm² as shown in Figure 18 with a digital exposure apparatus (INPREX IP-3600H, made by Fuji Film) by laser scanning exposure. The exposure was conducted such that in the figure, the exposure level in region A, denoted by no shading, was 0 mJ/cm², the exposure level in region B, denoted by horizontal hatching, was 14 mJ/cm², and the exposure level in region C, denoted by vertical hatching, was 40 mJ/cm². Subsequently, a furnace connected to a far infrared radiation heater was employed to heat the surface of the film R to R for 15 minutes to a temperature of 210°C, thereby patterning the optically anisotropic layer.
Finally, a wire bar was employed to apply heat-sensitive adhesive layer coating liquid AD-1 on the additive layer, the coating was dried, and a heat-sensitive adhesive layer of 2.0 micrometers in thickness was formed to prepare birefringence pattern transfer foil F-1 of Example 1. When the coating and drying steps were conducted under the same conditions to prepare a heat-sensitive adhesive layer comprised only of AD-1 on glass, measurement revealed the Re to be 2 nm.

### (Example 2: Preparation of birefringence pattern transfer foil having a film as a blocking prevention means)

### (Preparation of birefringence pattern transfer foil F-2 having a cover film on an adhesive layer)

Birefringence pattern builder P-1 was exposed and heated in the same manner as that in Example 1 to pattern an optically anisotropic layer.
Next, a wire bar was used to apply heat-sensitive adhesive layer coating liquid AD-2 on the additive layer, the coating was dried, and a heat-sensitive adhesive layer of 2.0 micrometers in thickness was formed. Subsequently, a cover film (Alfan, made by Oji Specialty Paper) was pressure bonded and birefringence pattern transfer foil F-2 of Example 2 was prepared. When the coating and drying steps were conducted under the same conditions to prepare a heat-sensitive adhesive layer comprised only of AD-2 on glass, measurement revealed the Re to be 0 nm.

### (Example 3: Preparation of birefringence pattern transfer foil having a pressure-sensitive adhesive layer with low retardation)

### (Preparation of birefringence pattern transfer foil F-3 having a pressure-sensitive adhesive layer with low retardation and cover film)

Birefringence pattern builder P-1 was exposed and heated in the same manner as that in Example 1 to pattern an optically anisotropic layer.
Next, an optical double-sided-adhesive film (467MP made by 3M) from which the detachment liner had been removed on one side was adhered to the surface of the additive layer to form a pressure-sensitive adhesive layer and birefringence pattern transfer foil F-3 of Example 3 was prepared. In this process, the detachment liner that had not been removed was employed without modification as a cover film. When only 467 PM was applied to glass, measurement revealed the Re to be 0 nm.

### (Comparative Example 1: Preparation of a birefringence pattern transfer foil without a blocking prevention means)

### (Preparation of a birefringence pattern transfer foil F-4 without a blocking prevention means)

Birefringence pattern builder P-1 was exposed and heated in the same manner as that in Example 1 to pattern the optically anisotropic layer.
Next, a wire bar was employed to apply heat sensitive adhesive layer coating liquid AD-2 on the additive layer, the coating was dried, and a heat-sensitive adhesive layer of 2.0 micrometers in thickness was formed. Birefringence pattern transfer foil F-4 of Comparative Example 1 was prepared. When the coating and drying steps were conducted under the same conditions to prepare a heat-sensitive adhesive layer comprised only of AD-2 on glass, measurement revealed the Re to be 0 nm.

### (Comparative Example 2: Preparation of birefringence pattern transfer foil having a pressure-sensitive adhesive layer with high retardation)

### (Preparation of birefringence pattern transfer foil F-5 having a pressure sensitive adhesive layer with high retardation and a cover film)

Birefringence pattern builder P-1 was exposed and heated in the same manner as that in Example 1 to pattern an optically anisotropic layer.
Next, a common double-sided adhesive film (NeoFix 30, made by NE-tak) from which the detachment liner had been removed on one side, was applied to the surface of the additive layer and birefringence pattern transfer foil F-5 of Comparative Example 2 was prepared. The detachment liner that had not been removed from the NeoFix 30 was employed without modification as a cover film. When only NeoFix 30 was applied to glass, measurement revealed the Re to be 154 nm.

### (A comparison of anti-blocking properties)

The anti-blocking properties of each of birefringence pattern transfer foils F-1 to F-5 were evaluated and tested. The evaluation conditions were as follows. A sample cut to 5 cm x 4 cm was positioned opposite a polyethylene naphthalate film and stacked. A 2 kg weight was applied. After 72 hours, the foil was detached and the results were observed. The results are given in Table 1.

**Table 1**

| Number | Blocking prevention means | Anti-blocking property |
|---|---|---|
| F-1 (present invention) | Silica microparticles | ○ |
| F-2 (present invention) | Cover film | ○ |
| F-3 (present invention) | Cover film | ○ |
| F-4 (Comp. Example) | None | X (transfer occurred on rear side) |
| F-5 (Comp. Example) | Cover film | ○ |

Although the evaluation results of birefringence pattern transfer foils F-1 to F-3 and F-5, which had blocking prevention means, presented no problems, with birefringence pattern transfer foil F-4, which had no blocking prevention means, a portion of the adhesive layer on the opposing back side ended up transferring, hindering use as a transfer foil.

### (A comparison of pattern visibility following transfer)

Birefringence pattern transfer foils F-1 to F-3 and F-5, which had good anti-blocking properties, were transferred to the surfaces of articles on which aluminum had been vapor deposited and articles M-1 to M-3 and M-5 were prepared. The visibility of the birefringence patterns was then compared.
Birefringence pattern transfer foil F-1, which had a heat-sensitive adhesive layer, was transferred by hot pressing at a conveyance rate of 1.0 m/min, a surface pressure of 0.2 MPa, and a roller temperature of 150°C with a laminator. Birefringence pattern transfer foil F-2 was transferred by hot pressing by the same means as that of F-1 after removing the cover film. The transmittance following transfer of F-1 and F-2 as measured following transfer to a polyethylene terephthalate film (the reference was a polyethylene terephthalate film) was 98% on average for the visible light region in both cases, and the haze was 1.7% in both cases.

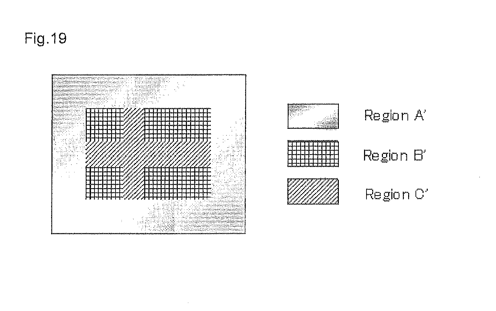

For birefringence pattern transfer foils F-3 and F-5, which had pressure-sensitive adhesive layers, with the exception that the roller temperature was not raised after the cover films were removed, transfer by pressing was conducted by the same method as that for F-1. The transmittance following transfer of F-3 and F-5 as measured following transfer to a polyethylene terephthalate film (the reference was a polyethylene terephthalate film) was 95% on average for the visible light region in both cases, and the haze was 2.4% and 2.6%, respectively.
A polarizing plate (HLC-5618, made by Sanritz), was held over article M-1 prepared using birefringence pattern transfer foil F-1. When held in a prescribed direction, the birefringence pattern was observed. Figure 19 shows an enlarged view of the pattern that was observed through the polarizing plate on article M-1. A bicolor pattern was observed such that in the figure, region A' appeared silver on the aluminum vapor-deposited surface as is, region B', denoted as squares, appeared deep blue, and region C', denoted as hatching, appeared yellow.

When articles M-2 and M-3, prepared using birefringence pattern transfer foils F-2 and F-3, were observed through a polarizing plate in the same manner, region A' also appeared silver, region B' appeared deep blue, and region C' appeared yellow in a bicolor pattern.
When article M-5, which was prepared using birefringence pattern transfer foil F-5, was observed through a polarizing plate, region A', which should have been silver, appeared deep blue, reducing the contrast with region B' and greatly compromising visibility. The colors of regions B' and C' also ended up shifting to yellow and bluish-green, respectively. The results are given in Table 2.

**Table 2**

| Number | Re of adhesive layer | Visibility |
|---|---|---|
| F-1 (present invention) | 2 nm | ○ |
| F-2 (present invention) | 0 nm | ○ |
| F-3 (present invention) | 0 nm | ○ |
| F-5 (Comp. Example) | 154 nm | X (background color changed, visibility deteriorated) |

That is, for articles M-1 to M-3 of the Examples in which birefringence pattern transfer foils having adhesive layers with no or low retardations were employed, birefringence patterns of high visibility were obtained. By contrast, for article M-5 of the comparative example in which a birefringence pattern transfer foil having an adhesive layer with a high retardation was employed, the background color changed, visibility deteriorated, and color shifting occurred in the other regions.

### Key to the Numbers

- 101: Patterned optically anisotropic layer
- 11: Temporary support or support
- 12: Adhesive layer
- 13: Detachment layer
- 14: Releasing layer
- 15: Orientation layer
- 16: Printed layer
- 17: Additive layer
- 18: Microparticles as blocking prevention means
- 19: Cover film as blocking prevention means
- 20: Optically anisotropic layer
- 21: Reflective layer
- 22: Transparent article main body
- 23: Reflective article main body

## Claims

1. A birefringence pattern transfer foil, comprising at least one patterned optically anisotropic layer having two or more regions of differing birefringence and at least one adhesive layer on a temporary support, **characterized in that** the retardation of the adhesive layer is 40 nm or less.

2. The birefringence pattern transfer foil according to claim 1, **characterized in that** a blocking prevention means is provided to the adhesive layer.

3. The birefringence pattern transfer foil according to claim 2, **characterized in that** the blocking prevention means is comprised of microparticles added to the adhesive layer.

4. The birefringence pattern transfer foil according to claim 2, **characterized in that** the blocking prevention means is a cover film adhered to the surface of the adhesive layer.

5. A birefringence pattern transfer foil, comprising at least one patterned optically anisotropic layer having two or more regions of differing birefringence and at least one adhesive layer on a temporary support, **characterized in that** a blocking prevention means is provided to the adhesive layer.

6. The birefringence pattern transfer foil according to any one of claims 2 to 5, **characterized by** being provided in the form of a roll film.

7. The birefringence pattern transfer foil according to any one of claims 1 to 6, **characterized in that** the patterned optically anisotropic layer is a layer formed from a composition comprising a liquid crystal compound having at least one reactive group.

8. The birefringence pattern transfer foil according to claim 7, **characterized in that** the liquid crystal compound comprises at least a radically reactive group and a cationically reactive group.

9. The birefringence pattern transfer foil according to claim 8, **characterized in that** the radically reactive group is an acrylic group and/or a methacrylic group, and the cationically reactive group is a vinyl ether group, an oxetane group, and/or an epoxy group.

10. The birefringence pattern transfer foil according to any one of claims 1 to 9, **characterized in that** the transmittance after transfer is 30% or greater.

11. A reflective article **characterized by** comprising a birefringence pattern transferred using the birefringence pattern transfer foil according to any one of claims 1 to 10.

12. A transparent article, **characterized by** comprising a birefringence pattern transferred using the birefringence pattern transfer foil according to any one of claims 1 to 10.
